# EUROPÄISCHE PATENTSCHRIFT

(11) **EP 2 571 829 B1**
(45) Veröffentlichungstag und Bekanntmachung des Hinweises auf die Patenterteilung: **28.11.2018**
(21) Anmeldenummer: 11721750.5
(22) Anmeldetag: 17.05.2011
(51) Int. Cl.: C04B 28/26, C09K 21/00

(54) **ZUSAMMENSETZUNGEN AUF BASIS UNTERSCHIEDLICHER WASSERGLÄSER**
COMPOSITIONS BASED ON DIFFERENT WATER GLASSES
COMPOSITIONS À BASE DE DIFFÉRENTS VERRES SOLUBLES

(30) Priorität: 26.05.2010 DE 102010029316; 17.05.2010 DE 102010020710
(43) Veröffentlichungstag der Anmeldung: 27.03.2013
(73) Patentinhaber: Cuylits Holding GmbH, 49593 Bersenbrück (DE)
(72) Erfinder: GROSSE-PERDEKAMP, Heinz-Jürgen, 48249 Dülmen (DE)
(74) Vertreter: Gille Hrabal
(86) Internationale Anmeldenummer: PCT/EP2011/057980
(87) Internationale Veröffentlichungsnummer: WO 2011/144618

(56) Entgegenhaltungen:
- WO-A1-2004/110951
- WO-A1-2008/116188
- US-A- 3 241 990
- US-A- 5 035 951
- US-A- 5 194 087
- US-A1- 2007 000 597

## Beschreibung

Die vorliegende Erfindung betrifft eine Zusammensetzung und deren Anwendung, insbesondere im Bereich des Brandschutzes.

Aufschäumende oder aufblähende Zusammensetzungen sind allgemein bekannt; sie bilden bei Hitze- und Feuereinwirkung durch Aufblähung ein dickes, relativ schwer entflammbares, isolierend wirkendes Material. Die wesentlichen aktiven Bestandteile derartiger Zusammensetzungen sind eine Kohlenstoffquelle, aus der letztlich das isolierend wirkende Kohlenstoffgerüst gebildet wird, ein Treibmittel, das die Dicke oder das Anschwellen der gebildeten Verbrennungsprodukte beeinflusst, und ein saurer Katalysator, beispielsweise eine saure Phosphorsäureverbindung, welche die aufblähende Reaktion unter Hitzeeinwirkung auslöst. Entsprechende aufschäumende/aufblähende Zusammensetzungen werden beispielsweise als Oberflächenbeschichtungen auf Substraten eingesetzt, um die Entflammbarkeit der Substrate zu verringern und die Substrate gegen Schäden zu schützen, die durch größere Hitze und Flammen entstehen können.

Der Begriff "aufschäumend beziehungsweise aufblähend" - so wie er im Rahmen der vorliegenden Erfindung verwendet wird - bezeichnet die Wirkungsweise besonderer Materialien, beispielsweise von Beschichtungen, die im Brandfall aufblähen und eine isolierende Schutzschicht bilden.

Als Brandschutzmassen verwendete aufschäumende Materialien enthalten üblicherweise als aufblähendes Brandschutzadditiv expandierbare Graphit-Interkalationsverbindungen, die auch als Blähgraphite bekannt und im Handel erhältlich sind.

Expandierbare Graphit-Interkalationsverbindungen sind Verbindungen, bei denen kleine Fremdmoleküle zwischen den Gitterschichten des Graphits eingelagert (interkaliert) werden. Solche Verbindungen werden üblicherweise hergestellt, indem gereinigter Naturgraphit in einer Lösung dispergiert wird, die ein Oxidationsmittel und eine starke Säure enthält. Durch die dabei stattfindende Oxidation entstehen in den Schichtgittern wasserunlösliche Salze sowie flüchtige Bestandteile, die dann auch für die Expansion im Brandfall verantwortlich sind.

Diese aus dem Stand der Technik bekannten aufblähende Zusammensetzungen weisen bestimmte Nachteile auf:
So ist einerseits das Brandschutzverhalten der aus dem Stand bekannten aufblähenden Zusammensetzungen häufig nicht ausreichend, da die Zusammensetzungen im Allgemeinen nur einen geringen Wassergehalt aufweisen und es im Brandfall nur zu einer geringen Freisetzung von kühlender Feuchtigkeit kommt.

Darüber hinaus wandeln sich mit Blähgraphit versehene aufblähende Zusammensetzungen im Brandfall häufig zu pulverförmigen Rückständen um, welche von dem zu schützenden Substrat durch einfache Luftzirkulation abgetragen werden, so dass keine formstabilen geblähten Rückstände verbleiben. Insbesondere ergibt sich nach der Expansion der aus dem Stand der Technik bekannten Zusammensetzungen kein ausreichender stabiler Verbund zwischen der geblähten Schicht und dem zu schützenden Substrat; die Brandschutzzusammensetzung platzt leicht von dem zu schützenden Substrat ab bzw. weist keine ausreichende Haftung zu dem Substrat auf.

Die aus dem Stand der Technik bekannten aufblähenden Zusammensetzungen sind darüber hinaus dahingehend nachteilig, als dass sie im Allgemeinen keine ausreichenden Klebeeigenschaften aufweisen, so dass bei der Herstellung von Verbundmaterialien häufig noch zusätzliche Klebmaterialien verwendet werden müssen. Die Verwendung von zusätzlichen Klebmaterialien kann im Einzelfall zu einer Brandförderung führen. Insbesondere ist aus dem Stand der Technik keine Zusammensetzung bekannt, welche ausreichende blähende Eigenschaften und Klebeeigenschaften aufweist.

Weiterer Stand der Technik lässt sich wie folgt zusammenfassen:
WO 2004/110951 A offenbart Zusammensetzungen, die Mischungen aus verschiedenen Wassergläsern enthalten können ohne die Wassergläser oder die Mischungen genau zu spezifizieren.
WO 2008/116188 A offenbart Zusammensetzungen, die ein Natron Wasser Glas und Mikropartikel enthalten.
US 2007/000597 A offenbart Mischungen von Wassergläsern, jedoch keine Mischungen aus zwei unterschiedlichen Natronwassergläsern mit spezifischer Viskosität.
US 5,194,087 offenbart feuerfeste Binderzusammensetzungen, die zwei Wassergläser enthalten können. Mischungen aus Natronwassergläsern mit spezifischer Viskosität werden nicht beschrieben.
US 3,241,990 offenbart ein Verfahren zur Herstellung von Zusammensetzungen, bei denen ein Wasserglas mit Natriumsulfit und Wasserstoffperoxid umgesetzt wird.
US 5,035,951 offenbart Beschichtungszusammensetzungen, die auf metallischen oder hölzernen Oberflächen aufgetragen werden, um diese feuerbeständiger zu machen.

Ausgehend von diesem Stand der Technik stellt sich die vorliegende Erfindung die Aufgabe, eine im Brandfall aufblähende Zusammensetzung bereitzustellen, welche mindestens einen zuvor beschriebenen Nachteil der aus dem Stand der Technik bekannten Zusammensetzungen behebt.

Dabei soll die vorliegende Erfindung eine aufblähende Zusammensetzung bereitstellen, bei der auf die Verwendung von Blähgraphit verzichtet wird, da hierdurch meist mechanisch sehr instabile Blähschichten gebildet werden. Ebenso soll eine Zusammensetzung bereitgestellt werden, die auf andere üblich Blähmittel wie Trianzinderivate, die in ihrer Handhabung nicht unproblematisch sind, verzichtet.

Insbesondere soll die vorliegende Erfindung eine aufblähende Zusammensetzung bereitstellen, welche eine verbesserte Brandschutzwirkung zeigt, die vorzugsweise auf einen höheren Gehalt an Wasser in der blähenden Zusammensetzung zurückzuführen ist. Ebenso soll durch die Bereitstellung der im Brandfall aufblähenden Zusammensetzung die Aufgabe gelöst werden, dass ein zusätzliches Verkapseln oder Abschotten der Brandschutzmasse, wie bei vielen Zusammensetzungen des Standes der Technik üblich, um nicht ihren ursprünglichen Wassergehalt durch Verdunstung zu verlieren, entfällt.

Des Weiteren soll die vorliegende Erfindung insbesondere eine aufblähende Zusammensetzung bereitstellen, welche im Fall eines Aufblähens einen im Wesentlichen formstabilen Verbund mit dem zu schützenden Substrat bildet. Besonders bevorzugt soll die aufblähende Zusammensetzung im Brandfall nicht zu pulverförmigen Rückständen auf dem Substrat führen, welche durch einfache Luftzirkulation abgetragen werden können. Ein Abplatzen der Brandschutzzusammensetzung von dem zu schützenden Substrat sollte möglichst vermieden werden und ein im Wesentlichen formstabiler aufgeblähter Verbund erreicht werden.

Schließlich stellt sich die vorliegende Erfindung vorzugsweise noch die Aufgabe, die aus dem Stand der Technik bekannten aufblähenden Zusammensetzungen dahingehend weiterzuentwickeln, dass die Zusammensetzung ausreichende Klebeeigenschaften aufweist, so dass bei der Herstellung von Verbundmaterialien keine zusätzlichen Klebmaterialien verwendet werden müssen.

Gelöst werden diese Aufgaben durch die Bereitstellung einer im Brandfall aufschäumenden Zusammensetzung.

Die Zusammensetzung ist dadurch gekennzeichnet, dass die Zusammensetzung
a. mindestens zwei unterschiedliche Natronwassergläser umfasst, wobei das erste Natronwasserglas eine Viskosität von 1000 bis 2400 mPa · s (20 °C) und das zweite Natronwasserglas eine Viskosität von 75 bis 250 mPa · s (20 °C) aufweist.

Im Allgemeinen besitzt die erfindungsgemäße Zusammensetzung aufblähende und aufschäumende Eigenschaften.

Besonders bevorzugt ist die erfindungsgemäße Zusammensetzung eine intumeszierende Zusammensetzung.

Die erfindungsgemäße Zusammensetzung umfasst vorzugsweise mindestens einen weiteren Bestandteil, welcher ausgewählt wird aus der Gruppe, bestehend aus
b. mindestens einem Treibmittel, bestehend aus mit Treibgas versehenen Mikrokapseln;
c. mindestens einem die Keramisierung der Zusammensetzung bei erhöhten Temperaturen unterstützenden Bestandteil; und
d. mindestens einer organischen Faser.

Erfindungsgemäß wurde herausgefunden, dass aufblähende Zusammensetzungen gemäß den vorstehenden Aspekten eine verbesserte Brandschutzwirkung zeigen, welche unter anderem auf einen höheren Gehalt an Wasser in der expandierenden Zusammensetzung im Vergleich zu Zusammensetzungen aus dem Stand der Technik zurückzuführen ist. Der erhöhte Wassergehalt in der erfindungsgemäßen Zusammensetzung ist auf die zuvor beschriebene Auswahl geeigneter Bestandteile und insbesondere auf die im Folgenden näher beschriebenen konkreten Bestandteile zurückzuführen.

In einer Ausführungsform ist die erfindungsgemäße Zusammensetzung frei von Blähgraphit. In einer weiteren Ausführungsform ist die erfindungsgemäße Zusammensetzung frei von üblichen Blähmitteln wie Trianzinderivaten. In einer bevorzugten Ausführungsform ist die erfindungsgemäße Zusammensetzung frei von Blähgraphit und Triazinderivaten.

Des Weiteren führt die erfindungsgemäße aufblähende Zusammensetzung im Brandfall zu einem im Wesentlichen formstabilen Verbund mit dem zu schützenden Substrat. Die erfindungsgemäße aufblähende Zusammensetzung führt im Brandfall bzw. nach dem Aufschäumen vorzugsweise nicht zu pulverförmigen Rückständen auf dem Substrat, welche durch einfache Luftzirkulation abgetragen werden können. Ein Abplatzen der Brandschutzzusammensetzung von dem zu schützenden Substrat wird im Wesentlichen vermieden. Die aufblähende Masse ist im Wesentlichen selbst formstabil.

Ebenso entfällt bei der erfindungsgemäßen Zusammensetzung vorzugsweise ein zusätzliches Verkapseln oder Abschotten der Brandschutzmasse, da der Zusatz von hygroskopischen und/oder feuchtigkeitszurückhaltenden Substanzen die Verdunstung von Wasser verhindert.

Schließlich weist die erfindungsgemäße Zusammensetzung ausreichende Klebeeigenschaften auf, so dass bei der Herstellung von Verbundmaterialien keine zusätzlichen Klebmaterialien verwendet werden müssen.

Im Folgenden werden die einzelnen Bestandteile der erfindungsgemäßen Zusammensetzung im Detail näher beschrieben.

### Wassergläser - Bestandteil a. -

Die erfindungsgemäße Zusammensetzung umfasst mindestens zwei unterschiedliche Natronwassergläser, wobei das erste Natronwasserglas eine Viskosität von 1000 bis 2400 mPa · s (20 °C) und das zweite Natronwasserglas eine Viskosität von 75 bis 250 mPa · s (20 °C) aufweist..

Durch den Einsatz von Wasserglasformulierungen kann die im Brandfall entstehende Wärme in zweifacher Weise reduziert werden. Wasserglas enthält einerseits chemisch und physikalisch gebundenes Wasser, welches im Brandfall dem Brandherd durch die Verdampfung dieses Wassers Wärme entzieht. Zum anderen führt das aufblähende Verhalten zu einem keramischen Schaum, der als Isolator wirkt. Der Anteil an Wasser im Wasserglas und auch das Blähverhalten sind von der Art des Wasserglases (Natron-, Kaliwasserglas etc.), und vom jeweiligen Mol- bzw. Gewichtsverhältnis (SiO₂:K₂O; SiO₂:Na₂O) abhängig.

Erfindungsgemäß wurde herausgefunden, dass die Verwendung von mindestens zwei unterschiedlichen Wassergläsern in den aufblähenden Zusammensetzungen ein für die Kühlwirkung vorteilhaftes Blähbild ergibt. Es stellte sich heraus, dass durch die Kombination von zwei unterschiedlichen Wassergläsern eine bessere Isolierwirkung erzielt werden konnte als für die jeweiligen einzelnen Wassergläser. Dieser synergistische Effekt konnte auf das wesentlich bessere Blähbild (kleinzelligere Bläschen) einer Zusammensetzung, umfassend mindestens zwei Wassergläsern, zurückgeführt werden. Überraschenderweise konnte mit der erfindungsgemäßen Zusammensetzung die Häufigkeit und die Gleichmäßigkeit kleiner Poren bei der Blähung erhöht werden. Dies führte zu einer Verbesserung der Isolierwirkung einer solchen Blähschicht.

Die erfindungsgemäße Zusammensetzung umfasst mindestens zwei unterschiedliche Natronwassergläser.

Wenn die erfindungsgemäße Zusammensetzung mindestens zwei unterschiedliche Natronwassergläser umfasst, so weist das erste Natronwasserglas eine Viskosität von 1000 bis 2400 mPa · s (20 °C) auf und weist vorzugsweise mindestens eine weitere der folgenden Eigenschaften auf:
(1) Gewichtsverhältnis von SiO₂ zu Na₂O gleich 2,30 bis 2,60, bevorzugt 2,32 bis 2,56, besonders bevorzugt 2,34 bis 2,54;
(2) Dichte von 1500 bis 1600 kg/m³, bevorzugt 1520 bis 1580 kg/m³, besonders bevorzugt 1540 bis 1565 kg/m³; und
(3) Wassergehalt von 50 bis 55 Gew.-%, bevorzugt 51 bis 54 Gew.-%, besonders bevorzugt 51,9 bis 53,6 Gew.-%.

Dieses Natronwasserglas sorgt für ein optimiertes Blähverhalten im Fall einer Expansion der erfindungsgemäßen Zusammensetzung. Aufgrund des großen Verhältnisses zwischen SiO₂ und Na₂O weist dieses erste Natronwasserglas eine verhältnismäßig hohe Viskosität auf, so dass es vorteilhaft sein kann, ein zweites Natronwasserglas in Kombination zu verwenden, welches eine geringere Viskosität aufweist.

Ferner bildet dieses Wasserglas im Brandfall relativ großporige Blasen, was durch Zugabe eines zweiten Wasserglases in feinporigere Bläschen erfindungsgemäß verändert werden kann.

Das zweite Natronwasserglas weist eine Viskosität von 75 bis 250 mPa · s (20 °C) auf und weist vorzugsweise mindestens eine weitere der folgenden Eigenschaften auf:
(1) Gewichtsverhältnis von SiO₂ zu Na₂O gleich 2,80 bis 3,80, bevorzugt 3,00 bis 3,60, besonders bevorzugt 3,10 bis 3,50;
(2) Dichte von 1300 bis 1500 kg/m³, bevorzugt 1330 bis 1450 kg/m³, besonders bevorzugt 1365 bis 1375 kg/m³; und
(3) Wassergehalt von 55 bis 70 Gew.-%, bevorzugt 60 bis 65 Gew.-%, besonders bevorzugt 63,2 bis 64,6 Gew.-%.

Dieses zweite Natronwasserglas sorgt für eine zufriedenstellende Viskosität der erfindungsgemäßen Zusammensetzung.

Als Natronwassergläser können beispielsweise ein Natronwasserglas mit einem Gewichtsverhältnis 2,3 als erstes Natronwasserglas und ein Natronwasserglas mit einem

Gewichtsverhältnis 3,3 als zweites Natronwasserglas verwendet werden. Das Verhältnis der beiden Wassergläser kann dabei bevorzugt zwischen 120-200 Gew.-Teile eines Natronwasserglases mit einem Gewichtsverhältnis von 2,3 zu 10-50 Gewichtsteile eines Natronwasserglases mit einem Gewichtsverhältnis von 3,3 betragen, besonders bevorzugt 140-180 Gew.-Teile zu 15-40 Gew.-Teile, insbesondere bevorzugt 155-165 Gew.-Teile zu 20-30 Gew.-Teile.

Auch die Verwendung von weiteren Kaliwassergläsern, wie bereits vorstehend erwähnt, ist im Rahmen der vorliegenden Erfindung möglich.

In der erfindungsgemäßen Zusammensetzung beträgt der Gehalt an Wassergläsern, insbesondere Natronwassergläsern, jeweils bezogen auf die Gesamtmasse der Zusammensetzung, im Allgemeinen 60 bis 98 Gew.-%, bevorzugt 70 bis 97 Gew.-%, weiter bevorzugt 80 bis 96 Gew.-%.

### Treibmittel bestehend aus mit Treibgas versehenen Mikrokapseln - Bestandteil b. -

Die erfindungsgemäße aufblähende Zusammensetzung umfasst vorzugsweise mindestens ein Treibmittel bestehend aus mit Treibgas versehenen Mikrokapseln.

Erfindungsgemäß wurde herausgefunden, dass durch die Verwendung dieses Bestandteil im Brandfall bzw. im Fall des Aufschäumens der erfindungsgemäßen Zusammensetzung einerseits ein sehr kompakter Mikroschaum mit guten Wärmedämmeigenschaften entsteht und andererseits der entstehende Schaum nicht so spröde ist wie ein reiner Wasserglasschaum, welcher ohne Verwendung von entsprechenden Mikrokapseln erzeugt wurde, ist. Dieses führt dazu, dass die erfindungsgemäße Zusammensetzung im Brandfall bzw. im Fall des Expandierens mit den Materialien, auf welche die Zusammensetzung aufgebracht ist oder in Kontakt steht, einen festen Verbund bildet und nicht von diesen Materialien abplatzt. Durch die ausgeprägten Wärmedämmeigenschaften können die zu schützenden Materialien vor einer hohen Wärmeeinwirkung, beispielsweise durch ein Feuer, geschützt werden.

Im Rahmen der vorliegenden Erfindung wird vorzugsweise auf die Verwendung von anderen Treibmitteln, wie beispielsweise Azoverbindungen, die einerseits teuer und andererseits in Ihrer Handhabung problematisch sowie ökologisch bedenklich sind, verzichtet. Auch auf die Verwendung von Blähgraphit kann im Rahmen der vorliegenden Erfindung verzichtet werden.

Überraschenderweise wurde festgestellt, dass die Verwendung von Mikrokapseln in der erfindungsgemäßen Zusammensetzung auf das im Brandfall entstehende Blähbild im Vergleich zu anderen blähfördernden Zuschlagsstoffen wie Harnstoff, anorgansichen Carbonaten oder Ammoniumverbindungen positiv beeinflusst. Unter Verwendung der Mikrokapseln entstand eine noch gleichmäßigere feinporige Schaumporenstruktur, die eine gute Isolierwirkung bzw. einen schlechten Wärmedurchgang bewirkt.

Das Treibmittel, bestehend aus mit Treibgas versehenen Mikrokapseln, enthält im Allgemeinen ein Treibgas, welches ausgewählt ist aus der Gruppe, bestehend aus Kohlenwasserstoffen, wie Propan, n-Butan, Isobutan, und Pentan; Fluorchlorkohlenwasserstoffen, wie Trichlorfluormethan und Dichloriddifluormethan; Dimethylether; Kohlendioxid; Stickstoff und Luft.

Besonders bevorzugt umfasst das Treibmittel, bestehend aus mit Treibgas versehenen Mikrokapseln, als Treibgas einen Kohlenwasserstoff, speziell Isobutan.

Besonders bevorzugt ist es, wenn das Treibmittel in einer Dispersion mit Wasser vorliegt. Man kann es entweder direkt als Dispersion oder auch getrocknet mit unterschiedlichen Trocknungsgraden einsetzen. Da die erfindungsgemäße Formulierung sowieso Wasser umfasst und dies auch bewusst wegen der zu erzielenden Kühlwirkung im Brandfall gewollt ist, wird aus wirtschaftlichen Gründen die preiswertere Dispersion der Mikrokapseln oder auch Material mit geringem Trocknungsgrad, also höherem Wasseranteil, bevorzugt verwendet.

Darüber hinaus weisen die mit Treibgas versehenen Mikrokapseln, jeweils bezogen auf die getrocknete Mikrokapsel, einen Gehalt an Treibgas, bevorzugt von Isobutan, von 2 bis 25 Gew.-%, bevorzugt 5 bis 20 Gew.-%, weiter bevorzugt 10 bis 15 Gew.-%, auf. Im Fall eines Brandfalls kommt es in der erfindungsgemäßen Zusammensetzung zu einer Freisetzung des Treibgases und damit zu einem Aufblähen der Zusammensetzung. Dabei resultiert, wie bereits erwähnt, ein kompakter Mikroschaum mit guten Wärmedämmeigenschaften, welcher nicht spröde ist.

Die äußere Hülle der Mikrokapseln kann aus einem beliebigen Polymermaterial gebildet werden, so lange das Material in der Lage ist, ein entsprechendes Treibgas einzuschließen und unter brandüblichen Bedingungen (Temperatur) freizusetzen.

Ein mögliches Hüllenmaterial für die erfindungsgemäß verwendeten Mikrokapseln ist ein Vinylidenchlorid-Mischpolymer.

Die erfindungsgemäß eingesetzten Mikrokapseln umfassen vorzugsweise ein das Hüllenmaterial bildende Polymersystem, welches ausgewählt ist aus der Gruppe, bestehend aus einem Vinylidenchlorid-Acrylnitril-Mischpolymer und einem Acrylnitril-(Meth)acrylat-Mischpolymer.

Die mit Treibgas versehenen Mikrokapseln weisen in diesem Fall, jeweils bezogen auf die getrockneten Mikrokapseln, im Allgemeinen einen Gehalt an Vinylidenchlorid-Mischpolymer von 60 bis 95 Gew.-%, bevorzugt 70 bis 90 Gew.-%, besonders bevorzugt 75 bis 85 Gew.-%, auf.

Die mit Treibgas versehenen Mikrokapseln können eine beliebige Teilchengröße aufweisen; mögliche Teilchengröße sind beispielsweise 1 bis 50 µm, bevorzugt 1 bis 40 µm, besonders bevorzugt 1 bis 30 µm.

Die genaue Größe der Mikrokapseln kann an den jeweiligen Anwendungsbereich und die übrigen Bestandteile der erfindungsgemäßen Zusammensetzung angepasst werden, wobei Mikrokapseln mit einem großen Volumen in der Regel zu einem großporigen Mikroschaum mit einer geringeren Wärmedämmeigenschaft führen, während zu kleine Mikrokapseln im Allgemeinen kein zufriedenstellendes Blähverhalten bewirken.

In der erfindungsgemäßen Zusammensetzung beträgt der Gehalt an mindestens einem Treibmittel, bestehend aus mit Treibgas versehenen Mikrokapseln, jeweils bezogen auf die Gesamtmasse der Zusammensetzung, im Allgemeinen 0,5 bis 10 Gew.-%, bevorzugt 1,0 bis 7,5 Gew.-%, weiter bevorzugt 2,0 bis 5,0 Gew.-%.

Entsprechende Treibmittel sind kommerziell erhältlich. Die unterschiedlichen Typen von Mikrokapseln differenzieren hinsichtlich Größe und damit Treibmittelgehalt. Im Rahmen der vorliegenden Erfindung können verschiedene Typen von Mikrokapseln verwendet werden, wobei der Mikrokapseltyp an die übrigen Bestandteile und das aufblähende Verhalten der Zusammensetzung angepasst wird.

### Die Keramisierung der Zusammensetzung bei erhöhten Temperaturen unterstützender Bestandteil - Bestandteil c. -

Die erfindungsgemäße Zusammensetzung umfasst vorzugsweise mindestens einen die Keramisierung der Zusammensetzung bei erhöhten Temperaturen unterstützenden Bestandteil. Die Keramisierung erfolgt dabei durch die Ausbildung einer Mineralmatrix, wobei durch den Bestandteil c. der Sinterprozess initiiert wird.

Der mindestens eine die Keramisierung der Zusammensetzung bei erhöhten Temperaturen unterstützende Bestandteil wird vorzugsweise ausgewählt aus der Gruppe, bestehend aus mineralischen Additiven, Aluminiumhydroxid, Filterstaub, keramischen Hohlkugeln, Glashohlkugeln, Vermiculit, Schaumglasgranulat, Schiefermehl, Quarzmehl, Glimmer, Wollastonit, Calciumcarbonate, Kaolin und Ettringit.

Insbesondere bevorzugt ist die Verwendung von Aluminiumhydroxid als Bestandteil c., welches im Fall der Expansion einerseits Wasser abspaltet und andererseits die Keramisierung fördert.

Neben den zuletzt genannten Bestandteilen ist es für den Keramisierungsprozess bevorzugt, dass Alkalisilikate wie Wassergläser in der erfindungsgemäßen Formulierung vorhanden sind.

In einer weiteren Ausführungsform ist die Verwendung von Vermiculiten als Bestandteil c. besonders bevorzugt.

Der Gehalt an dem die Keramisierung der Zusammensetzung bei erhöhten Temperaturen unterstützenden Bestandteil beträgt, jeweils bezogen auf die Gesamtmasse der Zusammensetzung, im Allgemeinen 0,5 bis 10 Gew.-%, bevorzugt 1 bis 8 Gew.-%, weiter bevorzugt 2 bis 6 Gew.-%.

Der mindestens eine die Keramisierung der Zusammensetzung bei erhöhten Temperaturen unterstützende Bestandteil erhöht im Allgemeinen den Feststoffgehalt der Zusammensetzung.

### Organische Faser - Bestandteil d. -

Die erfindungsgemäße Zusammensetzung umfasst vorzugsweise mindestens eine organische Faser, wobei die mindestens eine organische Faser im Allgemeinen so ausgewählt wird, dass ein Aufblähen der erfindungsgemäßen Zusammensetzung durch ein Vergasen des Fasermaterials unterstützt wird. Durch die Wahl einer entsprechenden organischen Faser wird das Blähverhalten der erfindungsgemäßen Zusammensetzung insgesamt verbessert. Der entstehende Schaum weist feinere Poren auf und zeigt eine bessere Isolierwirkung. Des Weiteren führt die Verwendung einer organischen Faser d. zu weniger spröden Intemeszenzschichten, die somit weniger bruchanfällig sind.

Vorzugsweise wird die mindestens eine organische Faser so ausgewählt, dass auch ein Plastifizieren der Zusammensetzung bei erhöhter Temperatur, insbesondere bei Temperaturen in einem Bereich von 80 bis 180 °C, unterstützt wird.

Die mindestens eine organische Faser umfasst daher im Allgemeinen ein Material, welches bei einer Temperatur von im Allgemeinen 80 bis 180 °C ein Aufblähen der erfindungsgemäßen Zusammensetzung bewirkt. Das bei diesen Temperaturen verdampfende Wasser, aber auch die Mikrokapseln wirken ebenfalls expandierend in diesem Temperaturbereich, wobei jedoch festgestellt wurde, dass die organische Faser aber auch bezüglich der Haftung im Brandfall zu einer Verbesserung führt. Ohne die verwendete Faser kommt es eher zu einem Ablösen von der zu schützenden Oberfläche.

Die mindestens eine organische Faser wird im Allgemeinen ausgewählt aus der Gruppe, bestehend aus Polyalkylenfasern, wie Polyethylenfasern und Polypropylenfasern; Polyacrylfasern; Aramidfasern; Polyamidfasern, wie Polyhexamethylendiadipamidfasern, Polycaprolactamfasern und Fasern aus aromatischen oder teilaromatischen Polyamiden; und Fasern aus teilaromatischen oder vollaromatischen Polyestern.

Es ist besonders bevorzugt, wenn die mindestens eine organische Faser eine Polyalkylenfaser, wie eine Polyethylenfaser oder eine Polypropylenfaser, ist. Die Verwendung einer Polyethylenfaser ist besonders bevorzugt.

Die mindestens eine organische Faser kann eine Voll- oder Hohlfaser sein.

Der Gehalt an der mindestens einen organischen Faser beträgt, jeweils bezogen auf die Gesamtmasse der Zusammensetzung, im Allgemeinen 0,1 bis 5 Gew.-%, bevorzugt 0,2 bis 4 Gew.-%, weiter bevorzugt 0,3 bis 3 Gew.-%.

Die positiven Wirkungen bei der Verwendung der organischen Faser in der erfindungsgemäßen aufblähenden Zusammensetzung ist darüber hinaus als überraschend anzusehen, da aufgrund des organischen Anteils des Fasermaterials eigentlich eine Komponente in die erfindungsgemäße Zusammensetzung inkorporiert wird, welche zu einem beschleunigten Brandverhalten der Zusammensetzung führen müsste. Dieses ist jedoch nicht der Fall und wird insbesondere auch durch die geringe, zuvor definierte Menge an Fasermaterial erreicht.

Die Verwendung einer entsprechenden organischen Faser bewirkt darüber hinaus und wie bereits erwähnt im Brandfall bzw. im Fall des Aufblähens der erfindungsgemäßen Zusammensetzung eine hohe Bindefähigkeit zu angrenzenden Substraten bzw. Materialien, auf welchen die erfindungsgemäße Zusammensetzung zwecks Brandschutz aufgetragen wurde.

Ferner dient die organische Faser auch gleichzeitig als Kohlenstoffquelle, da hierdurch ein isolierendes Gerüst erzielt wird.

Im Folgenden werden weitere mögliche und optionale Bestandteile der erfindungsgemäßen Zusammensetzung beschrieben.

### Borax - Bestandteil e. -

Ein weiterer bevorzugter Bestandteil der erfindungsgemäßen Zusammensetzung ist Dinatriumtetraborat-Decahydrat (Borax) als weiterer Bestandteil e.

Der Gehalt an Dinatriumtetraborat-Decahydrat, jeweils bezogen auf die Gesamtmasse der Zusammensetzung, beträgt im Allgemeinen 0,1 bis 10 Gew.-%, bevorzugt 0,25 bis 7,5 Gew.-%, weiter bevorzugt 0,5 bis 5,0 Gew.-%.

Das Borax wird als Matrixmaterial in der erfindungsgemäßen Zusammensetzung, insbesondere in Kombination mit den zuvor beschriebenen Wassergläsern, verwendet.

### Wasserglas/Borax-Härter - Bestandteil f. -

Die erfindungsgemäße Zusammensetzung kann zusätzlich mindestens einen weiteren Bestandteil f. umfassen, welcher zu einem Aushärten und/oder Abbinden der Zusammensetzung führt.

Der weitere Bestandteil wird im Allgemeinen ausgewählt aus der Gruppe, bestehend aus phosphathaltigen Wasserglashärtern, Glyoxal, Triacetin, Ethylencarbonat und Propylencarbonat.

Der Gehalt an dem mindestens einen weiteren Bestandteil f., jeweils bezogen auf die Gesamtmasse der Zusammensetzung, beträgt im Allgemeinen 0,5 bis 10 Gew.-%, bevorzugt 1,0 bis 7,5 Gew.-%, weiter bevorzugt 2,0 bis 5,0 Gew.-%.

Als weiterer Bestandteil f. wird vorzugsweise Glyoxal verwendet. Entsprechende Glyoxyllösungen sind kommerziell erhältlich und können einen Wassergehalt von beispielsweise 60 Gew.-% aufweisen.

### Hygroskopischer Bestandteil - Bestandteil g. -

Die erfindungsgemäße Zusammensetzung kann zusätzlich mindestens einen weiteren Bestandteil g. umfassen, welcher eine feuchtigkeitszurückhaltende und/oder hygroskopische Eigenschaft aufweist. Durch den Zusatz eines entsprechenden Bestandteils kann die Restfeuchtigkeit der erfindungsgemäßen Zusammensetzung eingestellt und konstant gehalten werden.

Dieser weitere Bestandteil g. wird vorzugsweise ausgewählt aus der Gruppe, bestehend aus Glycerin, Bittersalz (Magnesiumsulfat), Calciumchlorid, Zeolithen und Zucker (auch in Form von Melasse), wobei Zucker sowohl hygroskopisch ist, als auch gleichzeitig Kohlenstoffspender sein kann. Vorteilhaft ist vor allem die Verwendung von Bittersalz, da der hohe Anteil an Kristallwasser in dem Salz besonders positive Eigenschaften auf die Kühlwirkung, aber auch das Blähverhalten im Brandfall hat.

### Mikrowellenaktiver Bestandteil - Bestandteil h. -

Die erfindungsgemäße Zusammensetzung kann zusätzlich mindestens einen weiteren Bestandteil h. umfassen, welcher die Mikrowellenaktivität der Zusammensetzung steigert. Ein mikrowellenaktiver Bestandteil ist eine Substanz mit polaren Bindungsanteilen, die durch Mikrowellen zur Schwingung angeregt werden können. Die erfindungsgemäße Zusammensetzung besitzt von sich aus bereits ein hohes Maß an Mikrowellenaktivität. Diese Aktivität kann durch Zugabe mindestens eines weiteren Bestandteiles noch verstärkt werden.

Dieser weitere Bestandteil h. wird vorzugsweise ausgewählt aus der Gruppe, bestehend aus Metallpulvern oder -spänen, Graphitpulvern oder mineralischen Zuschlagsstoffen, wie Schiefermehl oder Aluminiumtrihydrat.

Darüber hinaus kann die erfindungsgemäße Zusammensetzung zusätzlich mindestens eine Kieselsäure umfassen. Die Verwendung von einer Kieselsäure führt zu einem bevorzugten Abbinden der Zusammensetzung, ohne das bei dem Abbinden zu viel Wasser bzw. Feuchtigkeit aus der Zusammensetzung verloren geht.

Auch weitere, für aufblähende Zusammensetzungen übliche Bestandteile können in der erfindungsgemäßen Zusammensetzung enthalten sein.

Die erfindungsgemäße Zusammensetzung expandieren im Allgemeinen bei einer Temperatur in einem Bereich von 80 bis 180 °C.

Die erfindungsgemäße Zusammensetzung weist dabei einen Gehalt an Wasser von im Allgemeinen 15 bis 65 Gew.-%, bevorzugt 20 bis 55 Gew.-%, besonders bevorzugt 25 bis 50 Gew.-%, jeweils bezogen auf die Gesamtmasse der Zusammensetzung, auf. Dieser Gehalt an Wasser in der erfindungsgemäßen Zusammensetzung kann durch die spezielle Auswahl der einzelnen Bestandteile oder durch die Zugabe von Wasser oder auch durch Zugabe der Komponenten in Form wässeriger Dispersionen, wie im Fall der Mikrokapseln als wässeriges Slurry, realisiert werden.

Durch die Zugabe von weiterem Wasser ist es auch möglich, höhere Gehalte an Wasser zu erzielen, beispielsweise von bis zu 95 Gew.-%

Die erfindungsgemäße Zusammensetzung weist bei Raumtemperatur eine Viskosität von im Allgemeinen 500 bis 80.000 mPa · s auf und liegt bei Raumtemperatur im abgebundenen Zustand im Allgemeinen in einer festen Konsistenz vor.

Insbesondere ist es bevorzugt, wenn die erfindungsgemäße Zusammensetzung den zuvor bestimmten Wassergehalt aufweist und sich hinsichtlich des Wassergehalts in einem stationären Gleichgewicht mit den Umgebungsbedingungen befindet, was durch die hygroskopischen Zusätze erreicht wird.

Der Wassergehalt der erfindungsgemäßen Zusammensetzung kann durch die Zugabe von Substanzen mit einem hohen Kristallwassergehalt wie beispielsweise Ettringit erhöht werden. Auch kann durch die Zugabe von Substanzen mit einem hohen Dampfdruck wie beispielsweise Glycerin das Austrocknen der Masse verringert oder verhindert werden. Die Zugabe solcher Substanzen fördert auch den Restfeuchtegehalt der Blähschicht, was positive Auswirkungen auf die Flexibilität dieser Schicht hat.

In einer bevorzugten Ausführungsform enthält die erfindungsgemäße Zusammensetzung folgende Bestandteile:

| | |
|---|---|
| Natronwasserglas (Gewichtsverhältnis 2,4): | 120-200 Gew.-Teile, bevorzugt 140-180 Gew.-Teile, besonders bevorzugt 155-165 Gew.-Teile |
| Natronwasserglas (Gewichtsverhältnis 3,3): | 10-50 Gew.-Teile, bevorzugt 15-40 Gew.-Teile, besonders bevorzugt 20-30 Gew.-Teile |
| Aluminiumtrihydrat: | 1-20 Gew.-Teile, bevorzugt 3-15 Gew.-Teile, besonders bevorzugt 5-10 Gew.-Teile |
| Polyethylenfaser: | 0,25-10,0 Gew.-Teile, bevorzugt 0,5-5,0 Gew.-Teile, besonders bevorzugt 1,0-3,0 Gew.-Teile |
| Treibmittel bestehend aus mit Treibgas versehender Mikrokapsel: | 1-20 Gew.-Teile, bevorzugt, 2-10 Gew.-Teile, besonders bevorzugt 3-7 Gew.-Teile |
| Bittersalz: | 1-20 Gew.-Teile, bevorzugt, 5-15 Gew.-Teile, besonders bevorzugt 8-12 Gew.-Teile |
| Glycerin: | 1-20 Gew.-Teile, bevorzugt, 5-15 Gew.-Teile, besonders bevorzugt 8-12 Gew.-Teile |
| Vermiculite: | 0-10 Gew.-Teile, bevorzugt 1-7 Gew.-Teile, besonders bevorzugt 2-4 Gew.-Teile |

Die erfindungsgemäße Zusammensetzung kann als Brandschutzmasse verwendet werden. Zu diesem Zweck kann die erfindungsgemäße Zusammensetzung auf beliebige Substrate oder Bauteile durch übliche Verfahren aufgebracht werden oder es können - soweit möglich - auch Substrate oder Bauteile mit der erfindungsgemäßen Zusammensetzung imprägniert werden.

### Verwendung der erfindungsgemäßen Zusammensetzung

Gegenstand der vorliegenden Erfindung ist daher zunächst auch die Verwendung der erfindungsgemäßen Zusammensetzung als aufblähende Brandschutzzusammensetzung zur flammhemmenden Ausrüstung von Materialien, wie Substraten oder Bauteilen. Geeignet ist die aufblähende Brandschutzzusammensetzung beispielsweise zur Ausstattung von Brandschutzabdichtungen für Durchbrüche, Durchführungen und sonstigen Öffnungen in Wänden, Böden und/oder Decken von Gebäuden, aber auch im Schiffs- und Fahrzeugbau (Waggons).

Die erfindungsgemäße Zusammensetzung weist jedoch nicht nur aufblähende Eigenschaften, sondern auch Klebeeigenschaften auf. Die erfindungsgemäße Zusammensetzung eignet sich daher insbesondere auch zur Verklebung von Materialien, insbesondere in Anwendungen, in welchen gleichzeitig die brandhemmende Wirkung der erfindungsgemäßen Zusammensetzung eine Rolle spielt.

Des Weiteren besitzt die erfindungsgemäße aufblähende Zusammensetzung, die durch die Zugabe von mindestens einem weiteren Bestandteil h. eine gesteigerte Mikrowellenaktivität besitzt, auf Kunststoffsubstraten eine sehr gute Haftung

### Brandschutzmasse, umfassend die erfindungsgemäße Zusammensetzung und einem organischen Harz

Die vorliegende Erfindung betrifft des Weiteren eine weitere Zusammensetzung, insbesondere als Formkörper ausgebildet, welche durch die Einbringung eines organischen Harzes in die erfindungsgemäßen zuvor beschriebenen Zusammensetzungen gebildet werden. Durch die Kombination der zuvor beschriebenen Zusammensetzung mit dem organischen Harz sind leichte Formteile zugänglich, die aufgrund der Anteile an der erfindungsgemäßen Zusammensetzung beim Beflammen keramisieren. Die Formteile weisen eine geringe Dichte auf. Des Weiteren weisen sie weniger spröde Eigenschaften als rein mineralische bzw. rein anorganische Systeme auf und sind damit weniger bruchanfällig.

In einer bevorzugten Ausführungsform besteht das organische Harz aus einem Kondensationsprodukt aus Formaldehyd und Harnstoff, und ist mit einem die Keramisierung unterstützenden Bestandteil, bevorzugt Aluminiumtrihydrat, gefüllt. Mit dem Aluminiumtrihydrat ist im Brandfall zusätzlich durch die energieaufnehmenden Wasseranteile eine das System kühlende und auch keramisierende Komponente vorhanden. Erfindungsgemäß können aber auch Leichtfüllstoffe ausgewählt aus der Gruppe, bestehend aus Glashohlkugeln, keramischen Hohlkugeln, Vermiculiten, bestimmten Filterstäuben und Perliten, zusätzlich oder anstatt des Aluminiumtrihydrats hinzugegeben werden. Dadurch sind die Dichte und die thermischen Dämmwerte der entstehenden Formkörper einstellbar. Das Harz und gegebenenfalls die weiteren Zusatzstoffe werden einem Schaummittel untergerührt oder auf andere Weisen aufgeschäumt und die erfindungsgemäße zuvor beschriebene aufblähende Zusammensetzung wird hinzugegeben. Des Weiteren kann ein Härter, bevorzugt eine saure Verbindung ausgewählt aus der Gruppe, bestehend aus Mineralsäuren, organischen Säuren oder sauren Salzen, hinzugegeben werden. Der optionale Einbau von hygroskopischen Bestandteilen g., wie zuvor beschrieben, ermöglicht eine Wasseraufnahme, die eine zusätzliche kühlende Wirkung bewirkt, was zu einer zusätzlichen Steigerung der Brandschutzwirkung führt.

Erfindungsgemäß ist eine Brandschutzmasse mit der folgend en Zusammensetzung bevorzugt:

Harnstoff-Formaldehyd-Kondensationsprodukt 25-120 Gew.-Teile

| | |
|---|---|
| Aluminiumtrihydrat | 5-100 Gew.-Teile |
| Schaummittel | 25-85 Gew.-Teile |
| Erfindungsgemäße Zusammensetzung | 1-50 Gew.-Teile |
| Calciumchlorid | 5-25 Gew.-Teile |

Bei dem Schaummittel handelt es sich um handelsübliche Tenside, die in wässeriger Lösung vorliegen.

### Verbundmaterial, umfassend die erfindungsgemäße Zusammensetzung

Demgemäß betrifft die vorliegende Erfindung auch ein Verbundmaterial, umfassend eine zuvor definierte Zusammensetzung und mindestens ein Trägermaterial, wobei die erfindungsgemäße Zusammensetzung entweder auf dem Trägermaterial aufgetragen oder das Trägermaterial mit der erfindungsgemäßen Zusammensetzung imprägniert wurde.

Das Trägermaterial entsprechender Verbundmaterialien wird vorzugsweise ausgewählt aus der Gruppe, bestehend aus Vliesmaterialien aus Glasfasern, Polyester, Naturfasern, Zellwolle/Zellstoff oder Polyamid; Gewebe aus Glasfasern oder Mischgewebe; Gittergelege aus Glasfasern; Mineralwolle aus Glas oder Stein; Zellulosematerialien wie Papiermaterialien und Pappmaterialien, Holzfaserplatten oder Wabenkonstruktionen; Kunststoffmaterialien; Metallmaterialien, wie Metallfolien und - bleche, insbesondere Aluminiumfolien und -bleche oder Edelstahlfolien und - bleche; Glasmaterialien, wie Glasfolien und Glaswolle; Baumwollgeweben; Holzmaterialien und Holzwerkstoffplatten wie MDF-, HDF- und Spanplatten;; Schäume aus Polyurethan, Polystyrol, Glas- oder Steinschaum, PVC oder Phenol; Materialien aus extrudiertem Polystyrol-Schaum; Materialien aus Polyethylen-Schaum und Materialien aus Polypropylen-Schaum; Folien aus Polypropylen, Polyethylen, Polyurethan oder Silicon und allgemeine Dekoroberflächen wie HPL oder CPL. Weitere geeignete Materialien sind Materialien aus Flachs-, Jute-, Hanf- und Cellulosefasern sowie ganz allgemein Textilmaterialien.

Ebenso ist es auch möglich Verbundaufbauten aus beispielsweise Glasgewebe/Aluminium oder HPL/Glasvlies) als Trägermaterial zu verwenden.

Darüber hinaus können die Trägermaterialien für bestimmte Einsatzgebiete perforiert, geschlitzt oder auf andere Weisen strukturiert werden.

Im Rahmen der vorliegenden Erfindung kann das Trägermaterial mit der aufblähenden Zusammensetzung imprägniert werden. Ein Imprägnieren des Trägermaterials ist durch die Verwendung eines Tauchbades, welches mit der erfindungsgemäßen Zusammensetzung gefüllt ist, und ein Eintauchen des Trägermaterials in das Tauchbad möglich.

Ein Imprägnieren entsprechender Trägermaterialien, insbesondere von Papier- oder Pappmaterialien, wie Papier- oder Pappwaben, führt zu einem Eindringen der erfindungsgemäßen Zusammensetzung zwischen die Fasern des Trägermaterials, so dass auch ein Schneiden entsprechend imprägnierter Trägermaterialien nicht zu einem Verlust der Brandschutzwirkung führt. Ein Imprägnieren der erfindungsgemäßen Zusammensetzung in entsprechende Trägermaterialien kann darüber hinaus durch die Verwendung von oberflächenaktiven Mitteln verbessert werden.

Ferner kann das Trägermaterial mit der erfindungsgemäßen Zusammensetzung beschichtet werden.

Eine weitere Möglichkeit zur Erhöhung der Wasseraufnahme der Substrate besteht darin, diese vor der Imprägnierung mit der erfindungsgemäßen Zusammensetzung mit hygroskopischen Substanzen zu behandeln, so dass der Zusatz dieser Substanzen in die erfindungsgemäße Zusammensetzung entfallen kann. Diese Verfahrensweise kann in Einzelfällen zu besseren Verträglichkeiten zwischen der erfindungsgemäßen Zusammensetzung und den hygroskopischen Stoffen führen.

Je nach Auswahl des Trägermaterials kann der imprägnierte oder beschichtete Verbundkörper aufgrund der hohen Flexibilität der erfindungsgemäßen Zusammensetzung auch in Rollwarenform vorliegen.

Wenn die erfindungsgemäße Zusammensetzung zum Schutz von aufgeschäumten Polyurethan-Platten verwendet wird, so kann ein Verbrennen der Polyurethan-Platten verhindert werden, obwohl diese herstellungsbedingt häufig große Mengen an brennbaren Treibgasen wie z.B. Pentan enthalten. Durch den hohen Feuchtigkeitsgehalt in der erfindungsgemäßen Zusammensetzung kommt es im Brandfall zu einem Austritt von großen Wasserdampfmengen, welche die austretenden entzündlichen Treibgase derart verdünnen, dass man außerhalb des Zündbereiches liegt.

Darüber hinaus betrifft die vorliegende Erfindung ein Verfahren zur Ausstattung von Trägermaterialien mit der erfindungsgemäßen Zusammensetzung, welches durch die die folgenden Verfahrensschritte gekennzeichnet ist:
(1) Bereitstellen einer erfindungsgemäßen Zusammensetzung;
(2) Bereitstellen eines entsprechenden, vorzugsweise zuvor definierten Trägermaterials; und
(3) Inkontaktbringen der erfindungsgemäßen Zusammensetzung und des Trägermaterials.

Das Inkontaktbringen in Verfahrensschritt (3) kann durch ein Imprägnieren des Trägermaterials mit der Zusammensetzung erfolgen oder die Zusammensetzung wird auf das Trägermaterial aufgetragen.

Wenn das Inkontaktbringen in Verfahrensschritt (3) durch ein Auftragen der Zusammensetzung auf das Trägermaterial erfolgt, so kann das Auftragen durch Aufspachteln, Aufsprühen, Aufwalzen oder Rakeln erfolgen.

Weiterer Gegenstand der vorliegenden Erfindung darüber hinaus ist ein Verbundkörper, erhältlich nach dem zuvor beschriebenen Verfahren.

Dieser Verbundkörper kann in der Form einer Schichtplatte vorliegen.

### Sandwich-Struktur

Weiterer Gegenstand der vorliegenden Erfindung ist auch ein Verbundkörper, umfassend ein Trägermaterial gemäß der oben stehenden Definition, welches mit einer erfindungsgemäßen Zusammensetzung versehen wurde, und mindestens eine weitere Schicht, welche durch eine Aluminiumfolie, ein Glasvlies oder ein Papier- oder Pappmaterial gebildet wird und welche auf dem Trägermaterial aufgebracht ist. Diese Verbundkörper werden im Rahmen der vorliegenden Erfindung auch als Sandwichstrukturen bezeichnet.

Das Trägermaterial kann vorzugsweise eine Papierwabe oder eine Pappwabe sein.

Die weitere Schicht kann beispielsweise durch ein perforiertes Papiervlies oder ein perforiertes Pappmaterial oder Glasvlies gebildet werden.

Diese durch ein perforiertes Papiervlies oder ein perforiertes Pappmaterial gebildete weitere Schicht kann ferner vorzugsweise mit einer flammhemmenden Zusammensetzung imprägniert sein. Die flammhemmende Imprägnierung kann auch mittels der erfindungsgemäßen Zusammensetzung erfolgen.

Auch die Verwendung einer Aluminiumfolie in einer entsprechenden Sandwichstruktur erfüllt hierbei gleich mehrere Funktionen. Die Aluminiumfolie bewirkt einerseits eine Reflektion von Wärmestrahlung, verhindert andererseits Wasserdampfdiffusion und schützt somit die erfindungsgemäße Zusammensetzung vor dem Austrocknen.

Der erfindungsgemäße Verbundkörper ist vorzugsweise durch folgenden Aufbau gekennzeichnet:
(1) eine erste Schicht aus einer Aluminiumfolie, einem Glasvlies, einem Papier- oder Pappmaterial oder einem Verbund davon;
(2) einer zweiten Schicht aus Vliesmaterial; Papiermaterial oder Pappmaterial, wie eine Papierwabe; Kunststoffmaterial; Metallmaterial, wie eine Metallfolien, insbesondere eine Aluminiumfolien; Glasmaterial, wie eine Glasfolie oder Glaswolle; Baumwollmaterial, Holzmaterial oder Mineralwollmaterial; Materialien aus Polyethylen-Schaum; Materialien aus extrudiertem Polystyrol-Schaum; Materialien aus Polyurethan-Schaum; Materialien aus Polypropylen-Schaum; Materialien aus Flachs, Jute, Hanf und Cellulose;
(3) eine zweite Schicht aus einer Aluminiumfolie, einem Glasvlies, einem Papier- oder Pappmaterial oder einem Verbund davon;
wobei der Verbundkörper dergestalt aufgebaut ist, dass die erste Schicht auf einer Seite der zweiten Schicht vorgesehen ist und die dritte Schicht auf der anderen Seite der zweiten Schicht vorgesehen ist und die erfindungsgemäße Zusammensetzung entweder imprägniert in der zweiten Schicht oder auf der zweiten Schicht auf einer Seite oder auf beiden Seiten aufgebracht vorliegt. Die mit der erfindungsgemäßen Zusammensetzung versehene zweite Schicht befindet sich somit in einem Sandwich zwischen der ersten und dritten Schicht.

Diese Sandwichstrukturen weisen nicht nur hervorragende brandhemmende Eigenschaften auf, sondern sind aufgrund der Klebeeigenschaften der erfindungsgemäßen Zusammensetzung ausreichend stark verbunden, ohne dass ein zusätzlicher Klebstoff verwendet wird.

Insbesondere bei der Verwendung von Pappwaben als zweite Schicht wird durch die Abdeckung der Pappwaben mit einer mit Brandschutzmasse versehenen Schicht der Wärmedurchgang durch Konvektion verhindert und gleichzeitig durch Verdampfung des Wassers aus der Brandschutzmasse eine kühlende Wirkung erzielt. Ferner wird durch das Aufschäumen der Masse eine isolierende Wirkung erzielt.

Im Brandfall bleiben die resultierenden erfindungsgemäßen Sandwichstrukturen intakt und es kommt nicht zu einer Abspaltung einzelner Schichten aus dem Sandwich.

Bei der Herstellung von Sandwichplatten mit nicht porösen oder nicht wasserdampfdurchlässigen Substraten, wie Platten aus expandierten Schaumpolystyrol, kann es bevorzugt sein, der erfindungsgemäßen Zusammensetzung noch einen Stoff hinzuzufügen, der zu einem Aushärten bzw. Abbinden der Brandschutzmasse führt, ohne dass das Abbinden oder Aushärten rein durch Verdunstung des im Wasserglas und in der Formulierung enthaltenen Wassers oder durch Umwandlung des Wasserglases mit Kohlendioxid aus der Umgebungsluft erfolgt. Derartige Stoffe, die für das Aushärten sorgen sind in der Literatur bekannt. Es kann sich beispielsweise um die bereits zuvor erwähnten phosphathaltigen Wasserhärter handeln; es können aber auch organische Verbindungen wie Ehtylen- oder Propylencarbonat, Glyoxal, Triacetin und ähnliches handeln. Entsprechende Bestandteile erfindungsgemäßer Zusammensetzungen wurden bereits zuvor beschrieben.

### Formkörper aus erfindungsgemäßer Zusammensetzung

Die erfindungsgemäße Zusammensetzung kann darüber hinaus zur Herstellung von Formkörpern verwendet werden. Weiterer Gegenstand der vorliegenden Erfindung ist daher ein Verfahren zur Herstellung von Formkörpern, umfassend die folgenden Verfahrensschritte:
(1) Überführen einer erfindungsgemäßem Zusammensetzung in eine geeignete, dem gewünschten Formkörper entsprechende Form;
(2) Energieeinwirkung auf die gemäß Verfahrensschritt (1) erhaltene vorgeformte Zusammensetzung.

Die in Verfahrensschritt vorgesehene Energieeinwirkung kann durch Wärme und/oder Mikrowellenbestrahlung erfolgen. Im Fall einer Wärmebehandlung kann diese bei Temperaturen in einem Bereich von 40 bis 120 °C erfolgen, wobei tendenziell tiefere Temperaturen einen feinporigeren Schaum und hohe Temperaturen einen grobporigeren Schaum ergeben. Durch die Auswahl geeigneter Temperaturen kann somit die Porenstruktur entsprechender Formkörper beeinflusst werden.

Die resultierenden Formkörper können beispielsweise als Leichtbaumaterialien verwendet werden. Eine Einstellung der Restfeuchte dieser Formkörper ist durch die Auswahl geeigneter Ausgangsmaterialien der erfindungsgemäßen Zusammensetzung sowie der angewendeten Temperaturen möglich.

Ein Konfektionieren entsprechender Formkörper ist durch Fräsen, Schneiden oder anderen formgebenden Verfahren möglich, kann aber auch schon durch Einbringung der Brandschutzmasse in eine vorgefertigte Form selbst erzeugt sein.

Die aus diesem Verfahren resultierenden Formkörper können ebenfalls im Bereich des Brandschutzes verwendet werden, beispielsweise zum flammhemmenden Schutz von Durchbrüchen, Durchführungen und sonstige Öffnungen in Wänden, Böden und/oder Decken von Gebäuden, welche zum Zwecke des Brandschutzes mit Brandschutz-Abdichtungen versehen werden müssen, um zu verhindern, dass im Brandfall das Feuer und der Rauch sich durch diese Öffnungen ausbreiten können. Solche Brandschutz-Abdichtungen können in Form von vorgefertigten Streifen, Ringen, Platten und dergleichen eingesetzt werden, die in die abzudichtenden Öffnungen eingebracht oder mit denen diese Öffnungen abgedeckt werden. Diese Formkörper können durch das zuvor beschriebene Verfahren ausgehend von der erfindungsgemäßen Zusammensetzung hergestellt werden.

### Beschreibung der Bilder

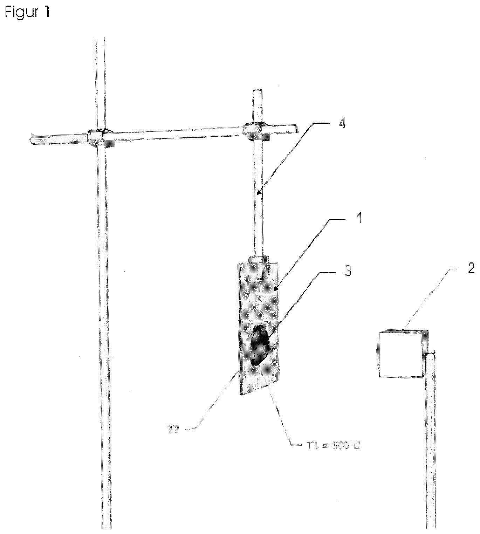

Figur 1: Versuchsanordnung zur Erzeugung der Blähschicht
   (1) mit erfindungsgemäßer Zusammensetzung beschichtetes Glasvlies aufgebracht auf einem Stahlblech
   (2) Wärmequelle (Ofen nach DIN 4102)
   (3) temperaturbeaufschlagte Fläche (Ø = 73 mm)
   (4) Vorrichtung zur Positionierung des Stahlbleches, auf das das mit der erfindungsgemäßen Zusammensetzung beschichteten Glasvlies aufgebracht ist, (1)
Figur 2: Oberflächenstruktur der Blähschicht aus der Zusammensetzung Z1
Figur 3: Oberflächenstruktur der Blähschicht aus der Zusammensetzung Z2
Figur 4: Oberflächenstruktur der Blähschicht aus der Zusammensetzung Z3
Figur 5: Oberflächenstruktur der Blähschicht aus der Zusammensetzung Z5
Figur 6: Oberflächenstruktur der Blähschicht aus der Zusammensetzung Z8
Figur 7: Übersicht über Eigenschaften der resultierenden Blähschicht
   (I) kaum Blähen
   (II) kleine Bläschen
   (III) eine große Blase
   (IV) viele mittelgroße Blasen
   (V) feinporiger Schaum

Die vorliegende Erfindung wird anhand der nachfolgenden Beispiele näher beschrieben, welche die vorliegende Erfindung jedoch nicht beschränken.

### 1. Aufblähende Zusammensetzung

Es wurden erfindungsgemäße Brandschutzzusammensetzungen mit folgenden Bestandteilen hergestellt:

**Tabelle 1: Bestandteile einiger Zusammensetzungen**

| Komponenten | Z1 (Gew.-%)* | Z2 (Gew.-%)* | Z3 (Gew.-%)* | Z4 (Gew.-Teile) | Z5 (Gew.-Teile)* | Z6 (Gew.-Teile) * | Z7 (Gew.-Teile) | Z8 (Gew.-Teile) |
|---|---|---|---|---|---|---|---|---|
| Natronwasserglas GV¹⁾ 2,4 | 100 | - | - | 160 | 160 | - | 160 | 160 |
| Natronwasserglas GV¹⁾ 3,3 | - | 100 | - | 27 | - | 160 | 27 | 27 |
| Kaliwasserglas GV²⁾ 2,5 | - | - | 100 | - | - | - | - | - |
| Aluminiumtrihydrat | - | - | - | - | 8 | 8 | 8 | 8 |
| Polyethylenfaser FPE 940T | - | - | - | - | 2 | 2 | 2 | 2 |
| Expancel | - | - | - | - | 5 | 5 | 5 | 5 |
| Bittersalz | - | - | - | - | 10 | 10 | 10 | 10 |
| Glycerin | | - | - | - | 10 | 10 | 10 | 10 |
| Vermiculite | | - | - | - | - | - | 3 | - |

| | | | | | | | | |
|---|---|---|---|---|---|---|---|---|
| ¹⁾ Gewichtsverhältnis SiO₂:Na₂O ²⁾ Gewichtsverhältnis SiO₂:K₂O *: Vergleichsbeispiel | | | | | | | | |

Des Weiteren wurden als optionale Zusatzstoffe Harnstoff, Natriumcarbonat, Calciumcarbonat und Ettingritt getestet. Für die Vergleichsversuche Z1 bis Z3 wurde jeweils das reine Wasserglas ohne weitere Zusätze verwendet.

Auf einem Glasvlies (45 g/m²) mit den Abmessungen 100 x 160 mm wurde mit einem Rakel die jeweilige Brandschutzmasse in einer Schichtdicke von 1 mm aufgebracht, 2 h bei 50 °C getrocknet und danach 24 h bei Raumtemperatur gelagert. Da die Dichten der meisten Versuchsproben bei ca. 1,40 g/ cm³ lagen, resultierten für alle Proben vergleichbar große Flächengewichte.

Die derart vorbereiteten Proben wurden mit der unbeschichteten Vliesseite auf ein Stahlblech aufgebracht. Die Rückseite dieses Stahlbleches (1) wurde in einer entsprechenden Vorrichtung (4) positioniert und mit einer konstanten Wärmequelle (2) beaufschlagt, wobei eine Temperatur an dieser Blechseite von T1=500 °C eingestellt wurde (vgl. Figur 1). Als Wärmequelle (2) wurde ein DIN-Ofen nach DIN 4102 verwendet, da sich hiermit eine gute regelbare und annähernd konstante Temperatur einstellen ließ.

Neben der Temperatur T1 auf der Rückseite des Bleches wurde auch stetig die Temperatur auf der Probenoberfläche, das heißt der beschichteten Vorderseite des Glasvlieses, gemessen, wobei der Messpunkt genau in der Mitte der temperaturbeaufschlagten Kreisfläche ((3), Ø = 73 mm) lag. Der Temperaturfühler wurde dabei flexibel angebracht, so dass die Temperatur immer an der äußeren Oberfläche der Schicht gemessen wurde. Kommt es zum Aufblähen , so wird der Temperaturfühler mit der expandierenden Schicht mit bewegt. Durch diesen Aufbau ist es möglich, die Isolierwirkung durch die Eigenschaften der entstehenden Blähschicht zu bestimmen. Als Referenzprobe diente ein unbeschichtetes Glasvlies.

Die Zeit zum Erreichen des Temperaturmaximums auf der beschichteten Probenvorderseite (T2) variierte in Abhängigkeit von der verwendeten Brandschutzmasse. Im Anschluss wurde das Blähbild der expandierten Schicht beurteilt.

Zur Charakterisierung des Blähbildes wurden folgende Beurteilungskriterien verwendet:

**Tabelle 2: Beurteilungskriterien zur Charakterisierung des Blähbildes**

| | groß | mittel | | klein |
|---|---|---|---|---|
| Größe der Blasen | ○ | ∼ | | Δ |
| | ungleichmäßg | | gleichmäßig | |
| Gleichmäßigkeit der Blasengröße | ○ | | Δ | |
| | wenige | | viele | |
| Häufigkeit der Blasen | ○ | | Δ | |
| | dünn | mittelmäßig | | dick |
| Dicke der Blähschicht | ○ | ∼ | | Δ |
| | spröde | | formstabiler Verbund | |
| Haftungseigenschaften der Blähschicht | ○ | | Δ | |

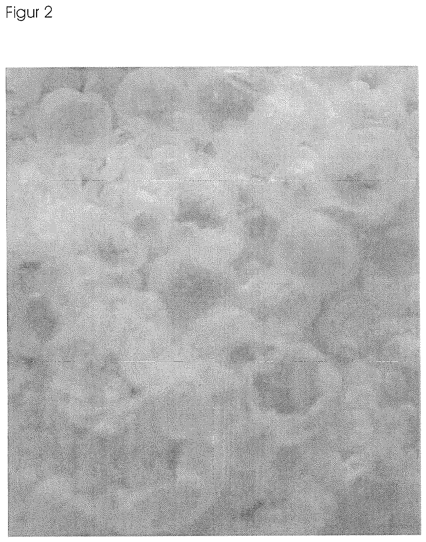

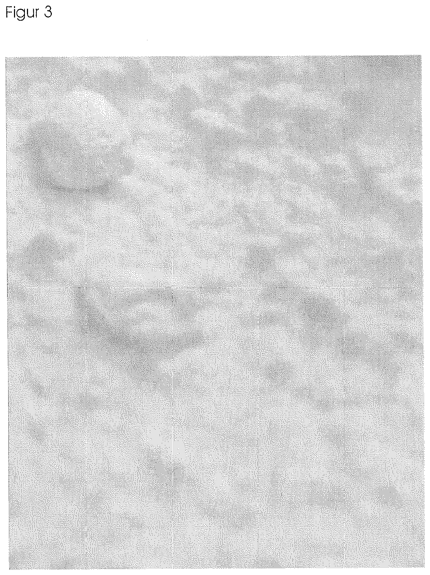

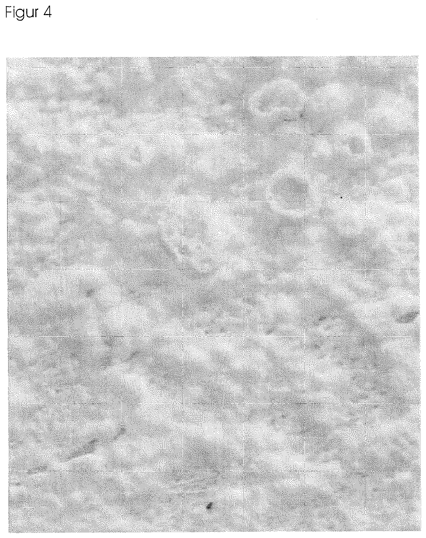

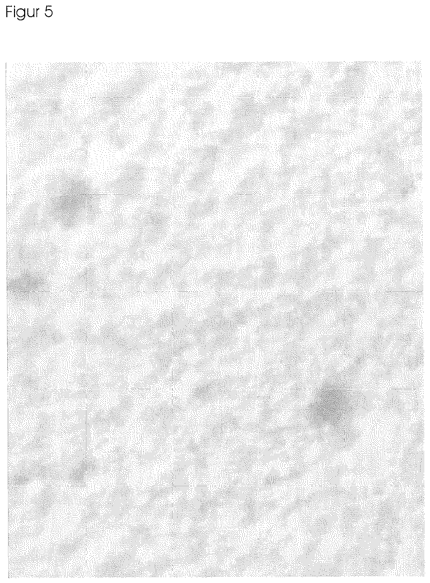

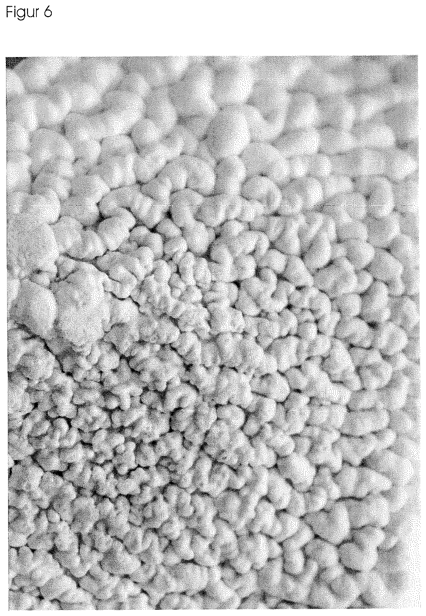

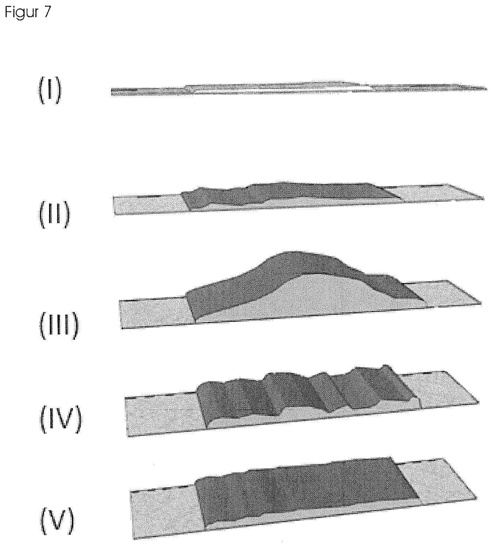

Zum Vergleich der einzelnen Beurteilungskriterien sind in den Figuren 2 bis 6 die Oberflächenstrukturen von Blähschichten unterschiedlicher Zusammensetzungen und in Figur 7 weitere Eigenschäften des Blähbildes dargestellt.

Es wurden folgende Temperaturen auf der beschichteten Probenvorderseite (T2) gemessen und die entstehenden Blähschichten wiesen folgende Eigenschaften auf:

**Tabelle 3: Eigenschaften der entstandenen Blähschichten:**

| verwendete Zusammensetzung | Maximale Temperatur auf der beschichteten Probenvorderseite (°C) | Blähverhalten der expandierten Schicht | | | | |
|---|---|---|---|---|---|---|
| | | Größe der Blasen | Gleichmäßigkeit der Blasengröße | Häufigkeit der Blasen | Dicke der Blähschicht | Haftungseigenschaften der Blähschicht |
| Z1 | 98 | ∼ | ○ | Δ | A | ○ |
| Z2 | 135 | Δ | ∼ | ○ | ○ | ○ |
| Z3 | 138 | Δ | ○ | ○ | ○ | ○ |
| Z4 | 95 | Δ/∼ | ○ | Δ | Δ | ○ |
| Z5 | 92 | Δ/∼ | Δ | Δ | Δ | Δ |
| Z6 | 93 | Δ | Δ | ○ | ○ | Δ |
| Z7 | 82 | Δ | Δ | Δ | Δ | Δ |
| Z8 | 87 | Δ | Δ | Δ | Δ | Δ |
| Referenz (unbeschichtetes Glasvlies) | 160 | - | - | - | - | - |

Je nach dem eingesetzten Wasserglas bzw. Wasserglasformulierungen wurden unterschiedliche Temperaturkurven, Temperaturmaxima und auch unterschiedliches Blähverhalten ermittelt. Es zeigte sich schnell, dass die maximal gemessene Temperatur auf der Oberfläche der beschichteten Probenvorderseite nicht von der Kühlwirkung des in der jeweiligen Rezeptur enthaltenen Wassers allein abhängig ist, sondern hauptsächlich von der Art des entstehenden Blähbildes bestimmt wird. Je kleiner, häufiger und gleichmäßiger verteilt die Blasen in der Blähschicht sind, desto besser ist die Isolierwirkung. Des Weiteren verbesserten sich die Hafteigenschaften der Blähsicht durch die Einarbeitung einer organischen Faser. Insgesamt bedeutet dies, dass desto mehr Δ (Dreiecke) in der Beurteilung der Blähschicht vorhanden sind, desto besser ist das Blähverhalten und dementsprechend wurde auch eine geringere Temperatur auf der Oberfläche der beschichteten Probenvorderseite gemessen.

Von den getesteten reinen Wassergläsern zeigt das Wasserglas mit einem Gewichtsverhältnis von 2,4 (Z1) das beste Blähverhalten und weist auch die geringste maximale Temperatur auf der beschichteten Probenvorderseite im Vergleich zu den anderen reinen Wassergläsern (Z2 und Z3) auf. Durch die gleichzeitige Verwendung von zwei unterschiedlichen Natronwassergläsern (Natronwasserglas GV 2,4: Natronwasserglas GV 3,3 = 6:1; Z4) hingegen kann nicht nur das Fließverhalten der Masse verbessert werden, sondern das Blasenbild beim Tempern wird ebenfalls positiv beeinflusst. Die entstehende Blähschicht weist ein Blähverhalten auf, das durch Verwendung der jeweiligen einzelnen Wassergläser nicht erzielt werden kann. Dieser synergistische Effekt führt dazu, dass eine maximale Temperatur von nur 95 °C auf der Probenrückseite gemessen werden konnte.

Durch die Formulierung der zwei unterschiedlichen Wassergläser (Verhältnis wie in Z4) mit weiteren Zuschlagstoffen kann die Isolierwirkung der Blähschicht weiter gesteigert werden (Z5-Z8). Die Einarbeitung weiterer Substanzen ändert das Blasenbild drastisch, teilweise nimmt die Kühlwirkung auch erheblich ab. Hier muss jedoch auch die Veränderung des Feststoffanteils berücksichtigt werden.

Insbesondere die Zugabe von Ettingrit und Aluminiumtrihydrat führt zu einem zusätzlich kühlenden Effekt, der in Abhängigkeit von der zugegebenen Menge ein Optimum durchläuft.

Bei der Zugabe von blähfördernden Zuschlagsstoffen wie Harnstoff, anorganische Carbonate, Ammoniumverbindung und mit Treibgas versehene Mikrokapseln wurde festgestellt, dass besonders die Zugabe der Mikrokapseln zu einer gleichmäßigeren, feinporigen Schaumstruktur führt, die wiederum positive Auswirkungen auf den Wärmedurchgang der resultierenden Schicht besitzt.

Auch die Einarbeitung einer Kunststofffaser verändert das Blähverhalten der Schicht zu feinerer Blasenbildung hin. Zusätzlich wird hier die Haftung zwischen der Blähschicht und dem Substrat deutlich verbessert.

Letztendlich führt die Zugabe von Vermiculit zur Zusammensetzung zu einer maximalen Temperatur auf der Probenrückseite von 82 °C, wodurch ein deutlicher Isoliereffekt der erfindungsgemäßen Zusammensetzung im Vergleich zur Referenz (160 °C) erzielt werden kann.

### 2. Herstellung von flammgeschützten Sandwichelementen

Es wird eine erfindungsgemäße Brandschutzzusammensetzung mit folgendem Aufbau hergestellt:

| | |
|---|---|
| Natronwasserglas GV 2,4 | 160 Gew.-Teile |
| Natronwasserglas GV3,3 | 27 Gew.-Teile |
| Aluminiumtrihydrat | 8 Gew.-Teile |
| Polyethylenfaser | 1,8 Gew.-Teile |
| Treibgas-Mikrokapslen | 5 Gew.-Teile |
| Borax (Natriumteraborat-Decahydrat) | 3 Gew.-Teile |

In Laborversuchen hat sich gezeigt, dass Sandwichelemente, die beispielsweise dadurch hergestellt werden, dass mehr oder weniger dünnwandige Plattenmaterialien, wie aus extrudiertem Polystyrolschaum, Polyurethan-, Polyethylen-, Polypropylen- oder anderen Polymerschäumen, mit Zwischenlagen, bestehend aus obiger Wasserglasformulierung, kombiniert werden, ein völlig verbessertes Wärmestandvermögen und Brandschutzverhalten aufweisen.

Während beispielsweise extrudiertes Schaumpolystyrol schon nach wenigen Sekunden bei Beaufschlagung mit einem Luftstrom von 100 °C wegschmilzt, kann ein Sandwich hergestellt aus dünnwandigem expandiertem Schaumpolystyrol mit einigen Zwischenlagen aus obiger Brandschutzmasse, die zum schnelleren Abbinden mit den oben genannten Härtern versetzt wurde auch längere Zeit einer Gasbrennerflamme widerstehen.

### 3. Herstellung von Plattenmaterial und Formkörpern

Gibt man die oben beschriebene Wasserglasmasse in entsprechende Formen und lässt Wärme oder auch Energie in Form von Mikrowellen darauf einwirken, so entstehen expandierte Platten oder entsprechende Formkörper mit einem geringen spezifischen Gewicht (zwischen 0,05 und 0,85 g/cm³), guten Wärmedämmeigenschaften und guter Hitze- und Flammbeständigkeit.

### 4. Herstellung von Verbundwerkstoffen

Zwecks besserer Verarbeitung kann es sinnvoll und vorteilhaft sein, die oben beschriebene Wasserglasmasse auf ein Substrat aufzubringen. Dieses Substrat kann eine Aluminiumfolie, ein Glas- oder Keramikvlies, ein Glas- oder Keramikgewebe, ein Papier, ein Textilgewebe, eine Kunststofffolie oder auch aus einer Kombination der zuvor genannten Materialien sein.

Mit den erfindungsgemäß hergestellten Verbundkörpern konnten im Brandversuch Resultate erzielt werden, die einer gleich dicken Mineralwollplatte oder auch anderen nach DIN 4102 zugelassenen Brandschutzplatten überlegen waren.

### 5. Sandwichplatten, bestehend aus Mineralwollplatten, beschichtet mit der erfindungsgemäßen Zusammensetzung als Brandschutzmasse

Mineralwollmatten bzw. -platten werden in dem Stand der Technik schon seit langer Zeit zur Verbesserung der Brandschutzeigenschaften in Brandschutztüren, Brandschutztoren oder auch in Brandschutzwänden verwendet.

Die Brandschutzeigenschaften lassen sich wesentlich verbessern, wenn diese Mineralwollprodukte zusätzlich mit der erfindungsgemäßen Zusammensetzung versehen werden.

Die Effizienz kann noch wesentlich gesteigert werden, indem die bereits beschrieben Brandschutzmassen derart modifiziert werden, dass das chemisch und physikalisch enthaltene Wasser auf Gehalte zwischen 50 bis 95 Gew.-% gesteigert wird. Damit das enthaltene Wasser mit der Zeit nicht durch Verdunstung verloren geht, werden der Brandschutzmasse wasserhaltende oder auch hygroskopische Substanzen zugesetzt.

Hierzu werden wegen der Nichtbrennbarkeit bevorzugt anorganische Substanzen, beispielsweise Bittersalz, Calciumchlorid, Zeolith oder ähnliche Stoffe, eingesetzt.

Werden organische Substanzen wie Zucker oder Melasse verwendet, so wird die Einsatzmenge wegen der Brennbarkeit auf geringe Mengen beschränkt.

Als funktionelle Füllstoffe werden beispielsweise Bittersalz, Borax, Ettringit oder Aluminiumhydroxidtrihydrat verwendet, da diese im Brandfalle ebenfalls Wasser abspalten und daher eine kühlende Wirkung aufweisen.

Die Substrate aus Mineralwolle werden auf der Oberfläche mit der erfindungsgemäßen Zusammensetzung beschichtet.

Im Einzelfall kann es sinnvoll und zweckmäßig sein, die erfindungsgemäße Zusammensetzung selbst noch weiter mit einer Aluminiumfolie, einem Glasvlies oder auch Verbundwerkstoffen aus diesen Materialien zu versehen. Aluminiumfolie erfüllt hierbei gleich mehrere Funktionen. Die Aluminiumfolie bewirkt eine Reflektion von Wärmestrahlung, verhindert eine Wasserdampfdiffusion und schützt die erfindungsgemäße Zusammensetzung vor dem Austrocknen.

Als besonders vorteilhaft hat sich auch ein Verbund aus Aluminiumfolie/mit Brandschutzmasse getränktem Vlies aus Papier oder auch Glasfasern und einer weiteren Abdeckung aus Aluminiumfolie erwiesen.

### 6. Brandschutzplatten aus Papierwaben

Die Behandlung von Cellulosesubstraten mit Flammschutzmitteln wie Boraten, Phosphaten oder auch Wasserglas als Flammschutzmittel ist aus dem Stand der Technik schon bekannt. Die so behandelten Produkte brennen zwar nicht mehr, aber sie veraschen und weisen dann keine mechanische Festigkeit mehr auf.

Papiersubstrate, die mit der oben beschriebenen erfindungsgemäßen Zusammensetzung imprägniert werden, sind nicht nur nicht brennbar, sondern keramisieren bei der Beflammung, so dass immer noch eine hohe statische Stabilität gewährleistet ist. Bei der Umwandlung der Cellulose in Kohlenstoff oder andere Pyrolyseprodukte wird zwar im Brandfall durch die exotherme Reaktion etwas Energie freigesetzt, die jedoch durch den Verdampfungsprozess des in der Brandschutzmasse enthaltenen Wassers überkompensiert wird. Hinzu kommt noch die Energie, die für das Aufschmelzen der in der Brandschutzmasse enthaltenen anorganischen Salze, beispielsweise Borax, benötigt wird. Das Borax und beispielsweise das ebenfalls enthaltene Kaolin sorgen unter anderem für das Keramisieren der Brandschutzmasse.

Werden Papierwaben mit den oben beschriebenen Brandschutzmassen imprägniert, so erhält man nicht brennbare Konstruktionsmaterialien, aus denen beispielsweise Wand-, Decken- oder auch andere Bauelemente gefertigt werden können.

Bei der Verwendung von aufblähenden Brandschutzmassen erhält man neben der kühlenden Wirkung durch das Verdampfen des enthaltenen Wassers auch eine wärmedämmende Wirkung durch das Ausschäumen der Wabenhohlräume mit dem entstehenden keramischen Schaum.

Die Brandschutzwirkung der so behandelten Papierwaben kann durch nachfolgende Maßnahmen noch weiter gesteigert werden.
1. Das für die Papierwaben eingesetzte Papier wird zuvor perforiert. Hierdurch wird einerseits weniger organisches Material der Pyrolyse ausgesetzt, es muss also weniger exotherme Energie kompensiert werden, zum anderen wird die Brandschutzmasse vom Papier besser aufgenommen und des Weiteren lagert sich die Brandschutzmasse in die perforierten Hohlräume ein, wodurch zusätzlich noch mehr Brandschutzmasse aufgenommen wird.
2. Als Deckschichten für die Papierwaben wird mit Brandschutzmasse imprägniertes Glas-, Papier- oder auch Kunststoffvlies verwendet. Durch diese Deckschichten wird einerseits die mechanische Stabilität der Papierwaben erhöht und zum anderen die Brandschutzwirkung. Die Menge der aufgebrachten Brandschutzmasse kann je nach Erfordernis variiert werden.

Statt Vlies können auch Deckschichten aus perforiertem und mit Brandschutzmasse perforiertem Papier eingesetzt werden.

Ferner können die so hergestellten Deckschichten zusätzlich auch mit Aluminiumfolie versehen werden, was die Wärmereflektion verbessert und die Wasserdampfdiffusion mindert.

### 7. Brandschutzmasse, bestehend aus der erfindungsgemäßen Zusammensetzung und einem organischen Harz

Es wird eine erfindungsgemäße Brandschutzmasse mit folgender Basisrezeptur hergestellt:

| | |
|---|---|
| Harnstoff-Formaldehyd-Kondensationsprodukt | 106 Gew.-Teile |
| Aluminiumtrihydrat | 70 Gew.-Teile |
| Schaummittel³⁾ | 60 Gew.-Teile |
| Härter | 12 Gew.-Teile |
| Natronwasserglas GV 2,4 | 16 Gew.-Teile |
| Natronwasserglas GV 3,3 | 2,7 Gew.-Teile |
| Mikrokapseln | 0,5 Gew.-Teile |
| Calciumchlorid, Bittersalz, Glycerin, oder Ettringit | 5-25 Gew.-Teile |
| Lösung aus Harnstoff und Magnesiumchlorid⁴⁾ | 7 - 15 Gew.-Teile |

| | |
|---|---|
| ³⁾Bei dem Schaummittel handelt es sich um handelsübliche Tenside, die in wässeriger Lösung vorliegen ⁴⁾ Dient zur Reduktion des überschüssigen Formaldehyds | |

Optional können auch hygroskopische Substanzen, wie Calciumchlorid, Glycerin, Bittersalz u. ä., anorganische Bindemittel, wie Natron- oder Kaliwasserglas, phosphatische Bindemittel wie Monoaluminiumphosphat, organische oder anorganische Fasern zur Erhöhung der mechanischen Festigkeit hinzugefügt werden.

Je nach Schaummittelmenge und Art der mechanischen Aufschäumung konnten Schaumdichten (getrockneter Zustand) im Bereich zwischen 200 und 500 kg/m³ erreicht werden, wobei die Formteile noch ein gutes Bruchverhalten zeigten.

Bei den brandtechnischen Untersuchungen konnte festgestellt werden, dass der Restfeuchtegehalt der hergestellten Formkörper einen relevanten Einfluss auf die Brandschutzeigenschaften hat. Ein Formkörper, der mit der Basisrezeptur hergestellt wurde zeigte nach dreimonatiger Lagerung bei Raumtemperatur eine Restfeuchte von ca. 3 %, mit Wassergläsern modifiziert konnten Restfeuchten von 6 -9 Gew.-% erreicht werden und durch Zusatz von hygroskopischen Komponenten konnten sogar Restfeuchten zwischen 15 und 23 Gew.-% erreicht werden. Die Restfeuchte wurde durch Differenzwägung vor und nach der Trocknung in einem Trockenschrank bestimmt.

Um den Einfluss der Restfeuchten auf die Brandschutzwirkung zu untersuchen, wurden 30 mm starke geschäumte Platten hergestellt und nach einer dreistündigen Trocknungszeit bei 60 °C mit einer ca. 1.600 °C heißen Gasflamme von einer Seite beflammt. Auf der Rückseite wurde die Durchgangstemperatur in Abhängigkeit von der Zeit ermittelt.

Bei einer Restfeuchte von ca. 15 Gew.-% verlängerte sich die Zeit bis zur Erreichung der max. Temperatur auf der Rückseite der Platte von ca. 70 °C um ca. 25 % gegenüber einer Platte aus der Basisrezeptur mit einer Restfeuchte von ca. 3 Gew.-%.

## Patentansprüche

1. Zusammensetzung, **dadurch gekennzeichnet, dass** die Zusammensetzung
a. mindestens zwei unterschiedliche Natronwassergläser umfasst, wobei das erste Natronwasserglas eine Viskosität von 1000 bis 2400 mPa · s (20 °C) und das zweite Natronwasserglas eine Viskosität von 75 bis 250 mPa · s (20 °C) aufweist.

2. Zusammensetzung nach Anspruch 1, umfassend zusätzlich mindestens einen weiteren Bestandteil, ausgewählt aus der Gruppe, bestehend aus
b. mindestens einem Treibmittel, bestehend aus mit Treibgas versehenen Mikrokapseln;
c. mindestens einem die Keramisierung der Zusammensetzung bei erhöhten Temperaturen unterstützenden Bestandteil; und
d. mindestens einer organischen Faser.

3. Zusammensetzung nach Anspruch 1 oder 2, **dadurch gekennzeichnet, dass** die Zusammensetzung mindestens zwei Natronwassergläser umfasst, wobei
das erste Natronwasserglas mindestens eine der folgenden Eigenschaften aufweist:
(1) Gewichtsverhältnis von SiO2 zu Na2O gleich 2,30 bis 2,60, bevorzugt 2,32 bis 2,56, besonders bevorzugt 2,34 bis 2,54;
(2) Dichte von 1500 bis 1600 kg/m3, bevorzugt 1520 bis 1580 kg/m3, besonders bevorzugt 1540 bis 1565 kg/m3;
(3) Viskosität bevorzugt von 1200 bis 2200 mPa · s (20 °C), besonders bevorzugt 1400 bis 2000 mPa · s (20 °C); und
(4) Wassergehalt von 50 bis 65 Gew.-%, bevorzugt 51 bis 54 Gew.-%, besonders bevorzugt 51,9 bis 53,6 Gew.-%. und
das zweite Natronwasserglas mindestens eine der folgenden Eigenschaften aufweist:
(1) Gewichtsverhältnis von SiO2 zu Na20 gleich 2,80 bis 3,80, bevorzugt 3,00 bis 3,60, besonders bevorzugt 3,10 bis 3,50;
(2) Dichte von 1300 bis 1500 kg/m3, bevorzugt 1330 bis 1450 kg/m3, besonders bevorzugt 1365 bis 1375 kg/m3;
(3) Viskosität bevorzugt von 85 bis 225 mPa · s (20 °C), besonders bevorzugt 100 bis 200 mPa · s (20 °C); und
(4) Wassergehalt von 55 bis 70 Gew.-%, bevorzugt 60 bis 65 Gew. %, besonders bevorzugt 63,2 bis 64,6 Gew.-%.

4. Zusammensetzung nach einem der Ansprüche 1 bis 3, **dadurch gekennzeichnet, dass** der mindestens eine die Keramisierung der Zusammensetzung bei erhöhten Temperaturen unterstützende Bestandteil ausgewählt ist aus der Gruppe, bestehend aus mineralischen Additiven, Aluminiumhydroxid, Filterstaub, keramischen Hohlkugeln, Glashohlkugeln, Schaumglasgranulat, Schiefermehl, Quarzmehl, Glimmer, Wollastonit, Calciumcarbonate, Kaolin, Vermiculit und Ettingritt.

5. Zusammensetzung nach einem der Ansprüche 1 bis 4, zusätzlich umfassend
(1) mindestens einen weiteren Bestandteil f., welcher zu einem Aushärten und/oder Abbinden der Zusammensetzung führt; und/oder
(2) mindestens einen weiteren Bestandteil g., welcher eine feuchtigkeitszurückhaltende und/oder hygroskopische Eigenschaft aufweist; und/oder
(3) mindestens eine Kieselsäure; und/oder
(4) mindestens einen weiteren Bestandteil h., welcher mikrowellenaktive Eigenschaften aufweist.

6. Verwendung einer Zusammensetzung gemäß einem der Ansprüche 1 bis 5
(1) zur flammhemmenden Ausrüstung von Materialien;
(2) zur Verklebung von Materialien; und/oder
(3) zur Herstellung von Formkörpern.

7. Verbundmaterial, umfassend eine Zusammensetzung gemäß einem der Ansprüche 1 bis 6 und mindestens ein Trägermaterial.

8. Verbundmaterial nach Anspruch 7, **dadurch gekennzeichnet, dass** das Trägermaterial ausgewählt ist aus der Gruppe, bestehend aus Vliesmaterialien; Papiermaterialien und Pappmaterialien, wie Papierwaben; Kunststoffmaterialien; Metallmaterialien, wie Metallfolien, insbesondere Aluminiumfolien; Glasmaterialien, wie Glasfolien und Glaswolle; Baumwollgeweben; Holzmaterialien; Mineralwolle; Materialien aus extrudiertem Polystyrol-Schaum, Polyurethan-Schaum, Polyethylen-Schaum und Polypropylen-Schaum; Materialien aus Jute-, Flachs-, Hanf- und Cellulosefasern; und Textilmaterialien.

9. Verfahren zur Ausstattung von Trägermaterialien mit einer Zusammensetzung gemäß einem der Ansprüche 1 bis 5, **gekennzeichnet durch** die folgenden Verfahrensschritte:
(1) Bereitstellen einer Zusammensetzung gemäß einem der Ansprüche 1 bis 5;
(2) Bereitstellen eines Trägermaterials gemäß der Definition in Anspruch 8; und
(3) Inkontaktbringen der Zusammensetzung gemäß einem der Ansprüche 1 bis 5 und des Trägermaterials gemäß der Definition in Anspruch 8.

10. Verbundkörper, umfassend ein Trägermaterial gemäß der Definition in Anspruch 8, welches mit einer Zusammensetzung gemäß einem der Ansprüche 1 bis 5 versehen wurde, und mindestens eine weitere Schicht, welche durch eine Aluminiumfolie, ein Glasvlies oder ein Papier- oder Pappmaterial gebildet wird und welche auf dem Trägermaterial aufgebracht ist.

11. Verbundkörper nach Anspruch 10, **gekennzeichnet durch** folgenden Aufbau:
(1) eine erste Schicht aus einer Aluminiumfolie, einem Glasvlies, einem Papier- oder Pappmaterial oder einem Verbund davon;
(2) eine zweiten Schicht aus Vliesmaterial; Papiermaterial oder Pappmaterial, wie eine Papierwabe; Kunststoffmaterial; Metallmaterial, wie eine Metallfolien, insbesondere eine Aluminiumfolien; Glasmaterial, wie eine Glasfolie oder Glaswolle; Baumwollmaterial, Holzmaterial oder Mineralwollmaterial; Materialien aus Polyethylen-Schaum; Materialien aus extrudiertem Polystyrol-Schaum; Materialien aus Polyurethan-Schaum; Materialien aus Polypropylen-Schaum; Materialien aus Flachs, Jute, Hanf und Cellulose;
(3) eine zweite Schicht aus einer Aluminiumfolie, einem Glasvlies, einem Papier- oder Pappmaterial oder einem Verbund davon;
wobei der Verbundkörper dergestalt aufgebaut ist, dass die erste Schicht auf einer Seite der zweiten Schicht vorgesehen ist und die dritte Schicht auf der anderen Seite der zweiten Schicht vorgesehen ist und die Zusammensetzung gemäß der Definition in einem der Ansprüche 1 bis 9 entweder imprägniert in der zweiten Schicht oder auf der zweiten Schicht auf einer Seite oder auf beiden Seiten aufgebracht vorliegt.

12. Verfahren zur Herstellung von Formkörpern, umfassend die folgenden Verfahrens-schritte:
(1) Überführen einer Zusammensetzung gemäß einem der Ansprüche 1 bis 5 in eine geeignete, dem gewünschten Formkörper entsprechende Form;
(2) Energieeinwirkung auf die gemäß Verfahrensschritt (1) erhaltene vorgeformte Zusammensetzung.

## Claims

1. A composition, **characterized in that** the composition comprises
a. at least two different sodium silicates, wherein the first sodium silicate comprises a viscosity comprised between 1000 and 2400 mPa · s (20°C) and the second sodium silicate comprises a viscosity comprised between 75 and 250 mPa · s (20°C).

2. A composition according to claim 1, additionally comprising at least one other component selected from the group composed of
b. at least one propellant composed of micro-capsules provided with propellant gas;
c. at least one component which supports the ceramization of the composition at higher temperatures; and
d. at least one organic fibre.

3. A composition according to claim 1 or 2, **characterized in that** the composition at least comprises two sodium silicates, wherein
the first sodium silicate has at least one of the following properties:
(1) the weight ratio of SiO₂ with respect to Na₂O is equal to 2.30 through 2.60, preferably 2.32 through 2.56, most preferably 2.34 through 2.54;
(2) a density comprised between 1500 and 1600 kg/m³, preferably between 1520 and 1580 kg/m³, most preferably between 1540 and 1565 kg/m³;
(3) a viscosity preferably comprised between 1200 and 2200 mPa · s (20°C), most preferably between 1400 and 2000 mPa · s (20°C); and
(4) a water content comprised between 50 and 65 % by weight, preferably between 51 and 54 % by weight, most preferably between 51.9 and 53.6 % by weight, and
the second sodium silicate has at least one of the following properties:
(1) the weight ratio of SiO₂ with respect to Na₂O is equal to 2.80 through 3.80, preferably 3.00 through 3.60, most preferably 3.10 through 3.50;
(2) a density comprised between 1300 and 1500 kg/m³, preferably between 1330 and 1330 kg/m³, most preferably between 1365 and 1375 kg/m³;
(3) a viscosity preferably comprised between 85 and 2250 mPa · s (20°C), most preferably between 100 and 200 mPa · s (20°C); and
(4) a water content comprised between 55 and 70 % by weight, preferably between 60 and 65 % by weight, most preferably between 63.2 and 64.6 % by weight.

4. A composition according to one of the claims 1 through 3, **characterized in that** the at least one component which supports the ceramization of the composition at higher temperatures is selected from the group composed of mineral additives, aluminium hydroxide, filter dust, ceramic hollow spheres, glass hollow spheres, granulate of glass foam, slate powder, quartz powder, mica, wollastonite, calcium carbonates, kaolin, vermiculite and ettingritt.

5. A composition according to one of the claims 1 through 4, additionally comprising
(1) at least one other component f., which causes the composition to harden and/or to set; and/or
(2) at least one other component g., which comprises a moistness restraining and/or hygroscopic property; and/or
(3) at least one silicic acid; and/or
(4) at least one other component h., which comprises microwave-active properties.

6. A use of a composition according to one of the claims 1 through 5
(1) for the flame-retarding equipment of materials;
(2) for gluing materials; and/or
(3) for producing moulded bodies.

7. A composite material comprising a composition according to one of the claims 1 through 6 and at least one carrier material.

8. A composite material according to claim 7, **characterized in that** the carrier material is selected from the group composed of non-woven materials; paper materials and cardboard materials, such as paper honeycombs; plastic materials; metal materials, such as metal foils, in particular aluminium foils; glass materials, such as glass foils and glass wool; cotton fabrics; wood materials; mineral wool; materials made of extruded polystyrene foam, polyurethane foam, polyethylene foam and polypropylene foam; materials made of jute, flax, hemp and cellulose fibres; and textile materials.

9. A method for providing carrier materials with a composition according to one of the claims 1 through 5, **characterized by** the following process steps:
(1) providing a composition according to one of the claims 1 through 5;
(2) providing a carrier material according to the definition in claim 8; and
(3) bringing the composition according to one of the claims 1 through 5 and the carrier material according to the definition in claim 8 into contact.

10. A composite body comprising a carrier material according to the definition in claim 8, which carrier material has been provided with a composition according to one of the claims 1 through 5 and at least one other layer which is formed by an aluminium foil, a glass fleece or a paper or cardboard material and which is applied onto the carrier material.

11. A composite body according to claim 10, **characterized by** the following structure:
(1) a first layer made of an aluminium foil, a glass fleece, a paper or cardboard material or a composite thereof;
(2) a second layer made of fleece material; paper material or cardboard material, such as a paper honeycomb; plastic material; metal material, such as metal foils, in particular aluminium foils; glass material, such as a glass foil or glass wool; cotton material, wood materials or mineral wool material; materials made of polyethylene foam; materials made of extruded polystyrene foam; materials made of polyurethane foam; materials made of polypropylene foam; materials made of flax, jute, hemp and cellulose;
(3) a second layer composed of an aluminium foil, a glass fleece, a paper or cardboard material or a composite thereof;
wherein the composite body is structured such that the first layer is provided on one side of the second layer and the third layer is provided on the other side of the second layer, and the composition according to the definition in one of the claims 1 through 9 is either impregnated in the second layer or is applied on one side or on both sides of the second layer.

12. A method for producing moulded bodies, comprising the following process steps:
(1) transferring a composition according to one of the claims 1 through 5 into an appropriate shape corresponding to the desired moulded body;
(2) applying energy to the composition preformed and obtained according to process step (1).

## Revendications

1. Composition **caractérisée en ce que** la composition comprend
a. au moins deux silicates de sodium différents, le premier silicate de sodium comprenant une viscosité comprise entre 1000 et 2400 mPa · s (20°C) et le deuxième silicate de sodium comprenant une viscosité comprise entre 75 et 250 mPa · s (20°C).

2. Composition selon la revendication 1, comprenant supplémentairement au moins un autre composant sélectionné dans le groupe composé de :
b. au moins un agent gonflant constitué par des microcapsules munis d'un gaz propulseur ;
c. au moins un composant, qui soutient la céramisation de la composition à des températures élevées ; et
d. au moins une fibre organique.

3. Composition selon la revendication 1 ou la revendication 2, **caractérisée en ce que** la composition comprend au moins deux silicates de sodium, dans lequel
le premier silicate de sodium comprend au moins une des propriétés suivantes :
(1) le rapport en poids de SiO₂ à Na₂O est égale à 2,30 à 2,60, de préférence à 2,32 à 2,56, de préférence particulière à 2,34 à 2,54 :
(2) une densité comprise entre 1500 et 1600 kg/m³, de préférence entre 1520 et 1580 kg/m³, de préférence particulière entre 1540 et 1565 kg/m³ ;
(3) une viscosité comprise de préférence entre 1200 et 2200 mPa · s (20°C). de préférence particulière entre 1400 et 2000 mPa · s (20°C) ; et
(4) une teneur en eau comprise entre 50 et 65 % en poids, de préférence entre 51 et 54 % en poids, de préférence particulière entre 51,9 et 53,6 % en poids, et
le deuxième silicate de sodium comprend au moins une des propriétés suivantes :
(1) le rapport en poids de SiO₂ à Na₂O est égale à 2,80 à 3,80, de préférence à 3,00 à 3,60, de préférence particulière à 3,10 à 3,50 :
(2) une densité comprise entre 1300 et 1500 kg/m³, de préférence entre 1330 et 1450 kg/m³, de préférence particulière entre 1365 et 1375 kg/m³ ;
(3) une viscosité comprise de préférence entre 85 et 225 mPa · s (20°C). de préférence particulière entre 100 et 200 mPa · s (20°C) ; et
(4) une teneur en eau comprise entre 55 et 70 % en poids, de préférence entre 60 et 65 % en poids, de préférence particulière entre 63,2 et 64,6 % en poids.

4. Composition selon l'une des revendications 1 à 3, **caractérisée en ce que** l'au moins un composant, qui soutient la céramisation de la composition à des températures élevées est sélectionné dans le groupe composé d'additifs minéraux, d'hydroxyde d'aluminium, de poussière de filtrage, de sphères creuses céramiques, de sphères creuses en verre, de granulés de verre mousse, de poudre d'ardoise. de poudre de quartz, de mica, de wollastonite, de carbonates de calcium, de kaolin, de vermiculite et d'éttingritte.

5. Composition selon l'une des revendications 1 à 4, comprenant supplémentairement
(1) au moins un autre composant f., qui provoque le durcissement et/ou la prise de la composition ; et/ou
(2) au moins un autre composant g., qui comprend une caractéristique retenant de l'humidité et/ou hygroscopique ; et/ou
(3) au moins un acide silicique ; et/ou
(4) au moins un autre composant h., qui comprend des caractéristiques actifs aux micro-ondes.

6. Utilisation d'une composition selon l'une des revendications 1 à 5
(1) pour l'équipement retardant la flamme de matériaux ;
(2) pour le collage de matériaux ; et/ou
(3) pour la fabrication de corps moulés.

7. Matériau composite comprenant une composition selon l'une des revendications 1 à 6 et au moins un matériau de support.

8. Matériau composite selon la revendication 7, **caractérisé en ce que** le matériau de support est sélectionné dans le groupe composé de matériaux non tissés ; de matériaux de papier et de matériaux de carton, tels que des papiers alvéolaires ; de matériaux synthétiques ; de matériaux métalliques, tels que des feuilles métalliques, notamment des films aluminium ; de matériaux en verre, tels que des films de verre et de la laine de verre ; de tissus de coton ; de matériaux de bois ; de laine minérale ; de matériaux en mousse de polystyrène extrudée, en mousse de polyuréthane, en mousse de polyéthylène et en mousse de polypropylène ; de matériaux en fibres de jute, de lin, de chanvre et de cellulose ; et de matières textiles.

9. Procédé destiné à équiper des matériaux de support d'une composition selon l'une des revendications 1 à 5, **caractérisé par** les étapes de procédé suivantes de :
(1) fournir une composition selon l'une des revendications 1 à 5 ;
(2) fournir un matériau de support selon la définition dans la revendication 8 ; et
(3) mettre la composition selon l'une des revendications 1 à 5 en contact avec le matériau de support selon la définition dans la revendication 8.

10. Corps composite comprenant un matériau de support selon la définition dans la revendication 8, lequel a été muni d'une composition selon l'une des revendications 1 à 5, et au moins une autre couche, qui est formée par un film aluminium, un voile de verre ou un matériau de papier ou de carton et qui est appliquée sur le matériau de support.

11. Corps composite selon la revendication 10, **caractérisé par** la structure suivante :
(1) une première couche formée par un film aluminium, un voile de verre ou un matériau de papier ou de carton ou un composite de ceux-ci ;
(2) une deuxième couche en matériau non tissé ; en matériau de papier et en matériau de carton, tel que un papier alvéolaire ; en matériau synthétique ; en matériau métallique, tel qu'une feuille métallique, notamment un film aluminium ; en matériau en verre, tel qu'un film de verre et ou de la laine de verre ; en matériau de coton ; en matériau de bois ou en matériau de laine minérale ; en matériaux en mousse de polyéthylène ; en matériaux en mousse de polystyrène extrudée ; en matériaux en mousse de polyuréthane ; en matériaux en mousse de polypropylène ; en matériaux de jute, de lin, de chanvre et de cellulose ;
(3) une deuxième couche formée par un film aluminium, un voile de verre ou un matériau de papier ou de carton ou un composite de ceux-ci ;
dans lequel le corps composite est structuré de sorte que la première couche est prévue sur un côté de la deuxième couche et la troisième couche est prévue sur l'autre côté de la deuxième couche et la composition selon la définition dans une des revendications 1 à 9 est imprégnée dans la deuxième couche ou est appliquée sur un côté ou sur les deux côtés de la deuxième couche.

12. Procédé se fabrication de corps moulés, comprenant les étapes de procédé suivantes de :
(1) convertir une composition selon l'une des revendications 1 à 5 en une forme appropriée correspondant au corps moulé désiré ;
(2) appliquer de l'énergie à la composition préformée et obtenue selon l'étape de procédé (1).
